(19) **Europäisches Patentamt**
**European Patent Office**
**Office européen des brevets**

(11) **EP 3 420 328 B1**

(12) **EUROPÄISCHE PATENTSCHRIFT**

(45) Veröffentlichungstag und Bekanntmachung des Hinweises auf die Patenterteilung:
**28.05.2025 Patentblatt 2025/22**

(21) Anmeldenummer: **17705633.0**

(22) Anmeldetag: **17.02.2017**

(51) Internationale Patentklassifikation (IPC):
**G01J 9/02** *(2006.01)* **G01B 9/02097** *(2022.01)*

(52) Gemeinsame Patentklassifikation (CPC):
**G01J 9/02; G01B 9/02097**

(86) Internationale Anmeldenummer:
**PCT/EP2017/053623**

(87) Internationale Veröffentlichungsnummer:
**WO 2017/144364 (31.08.2017 Gazette 2017/35)**

(54) **DREIDIMENSIONALES INTERFEROMETER UND VERFAHREN ZUR BESTIMMUNG EINER PHASE EINES ELEKTRISCHEN FELDES**

THREE-DIMENSIONAL INTERFEROMETER AND METHOD FOR DETERMINING A PHASE OF AN ELECTRICAL FIELD

INTERFÉROMÈTRE TRIDIMENSIONNEL ET PROCÉDÉ DE DÉTERMINATION D'UNE PHASE D'UN CHAMP ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2016 DE 102016103295**

(43) Veröffentlichungstag der Anmeldung:
**02.01.2019 Patentblatt 2019/01**

(73) Patentinhaber: **Berz, Martin**
**81675 München (DE)**

(72) Erfinder: **Berz, Martin**
**81675 München (DE)**

(74) Vertreter: **Global IP Europe Patentanwaltskanzlei**
**Pfarrstraße 14**
**80538 München (DE)**

(56) Entgegenhaltungen:
**DE-A1- 19 809 055 US-A1- 2004 033 426**
**US-B2- 7 499 174**

- **GIANCARLO PEDRINI ET AL: "Digital holography of self-luminous objects by using a Mach?Zehnder setup", OPTICS LETTERS, OPTICAL SOCIETY OF AMERICA, US, vol. 37, no. 4, 15 February 2012 (2012-02-15), pages 713 - 715, XP001574182, ISSN: 0146-9592, [retrieved on 20120214], DOI: 10.1364/OL.37.000713**

**Beschreibung**

Die Erfindung betrifft ein Verfahren zur Vermessung eines Lichtfelds mit einem dreidimensionalen Interferometer. Das Verfahren eignet sich beispielsweise für die Bestimmung einer Phasendifferenz an mindestens einem Punkt eines Interferenzbereichs des dreidimensionalen Interferometers sowie ein Verfahren zur Bestimmung einer Phase eines elektrischen Feldes in einem Teil des Interferenzbereichs des dreidimensionalen Interferometers.

Interferometer können nach ihrer Anordnung im Raum unterschieden werden. Für gewöhnlich sind Interferometer, wie z.B. das Mach-Zehnder-Interferometer, das Michelson-Interferometer oder das Sagnac-Interferometer, zweidimensionale Interferometer. Eine Abgrenzung zwischen zwei- und dreidimensionalen Interferometern ist im allgemeinen Beschreibungsteil angegeben.

Ferner ist im Stand der Technik die Holographie bekannt. Die Holographie ist eine interferometrische Technik, die es erlaubt, die Amplituden- und die Phaseninformation einer Wellenfront zu speichern, zu rekonstruieren oder zu messen. Das Ergebnis der Anwendung dieser Technik wird Hologramm genannt. Bei Digitaler Holographie wird das Hologramm digital gespeichert. Eine holographische Kamera ist eine Vorrichtung, die ein Hologramm aufnimmt. Im Rahmen der vorliegenden Anmeldung wird unter einer holographischen Kamera eine Vorrichtung verstanden, die für ein einfallendes Feld, insbesondere ein Lichtfeld, die Phase oder die Phase und die Amplitude misst.

Ferner sind im Stand der Technik holographische Messsysteme bekannt, die dazu dienen, die Amplitude und Phase eines Lichtfeldes zu messen. Der für die Holographie übliche Aufbau besteht aus einer Lichtquelle, einem Strahlteiler, der das Licht in einen Referenzstrahl und einen Objektstrahl aufteilt, wobei der Objektstrahl auf das zu vermessende Objekt gerichtet wird, dort reflektiert/gestreut wird und dann mit dem Referenzstrahl zur Interferenz gebracht wird. Diese Technik setzt das Vorhandensein eines realen Objektes voraus, d.h. das abzubildende Objekt kann kein virtuelles Objekt sein.

Ein anderes Beispiel für eine örtliche Phasenmessung ist das Twyman-Green-Interferometer, eine Sonderform des Michelson-Interferometers. Das Twyman-Green-Interferometer ist ein zweidimensionales Interferometer, bei dem einer der Interferometerarme das zu beprobende Objekt enthält, z.B. eine Linse, ein Prisma oder eine Oberfläche. Die örtliche Messung betrifft somit nicht das Eingangsfeld, sondern eine Eigenschaft des Interferometers. Es handelt sich somit hier nicht um eine örtliche Messung eines Eingangsfeldes. Das Interferogramm enthält Informationen über die räumlichen Oberflächeneigenschaften des zu beprobenden Objekts. Charakteristisch ist, dass das zu beprobende Objekt Teil des Interferometers ist. In einer alternativen Sichtweise der Funktion wird an dem zu beprobenden Objekt kohärentes Licht reflektiert, das mit einem Probestrahl, der über den anderen Arm des Michelson-Interferometers erzeugt wird, zur Interferenz gebracht wird. Auch bei dieser Darstellung ist das zu beprobende Objekt Teil des interferometrischen Aufbaus und muss daher hohe Kriterien an die mechanische Stabilität, Staubfreiheit und allgemein an die Reproduzierbarkeit erfüllen. Der Twyman-Green-Interferometer ist somit kein Interferometer zur örtlichen Phasenmessung des Eingangsfeldes.

Das Twyman-Green-Interferometer kann als ein holographisches Messsystem aufgefasst werden, bei dem einer der Arme des Michelson-Interferometers zur Erzeugung des Referenzstrahls verwendet wird. Die Überlappung des Referenzstrahls und des Objektstrahls erfolgt beim Twyman-Green-Interferometer über den gleichen Strahlteiler, der auch für die Aufspaltung in Objekt- und Referenzstrahl verwendet wurde.

Sowohl das Twyman-Green-Interferometer als auch das holographische Messsystem verwenden einen Referenzstrahl. Ein Referenzstrahl setzt voraus, dass es möglich ist, Licht von der Lichtquelle auszukoppeln, bevor es das Objekt erreicht. Die räumliche Konstellation von Lichtquelle, Objekt und Messvorrichtung muss damit geeignet eingerichtet werden, da ansonsten die Messung nicht durchführbar ist. Diese Art der Bereitstellung eines Referenzstrahls wird externe Referenzstrahlbereitstellung genannt.

Aus der nachveröffentlichten Deutschen Patentanmeldung mit dem Aktenzeichen DE 10 2014 111 979.7 ist ein dreidimensionales Interferometer bekannt, bei dem für jeden Punkt des abzubildenden Objektes der vom Objektpunkt in Richtung der Vorrichtung ausgehende Lichtstrahl hinsichtlich seines Wellenvektors vermessen wird. Das dabei verwendete Verfahren setzt voraus, dass das Licht unterschiedlicher Objektpunkte zueinander inkohärent ist, d.h., dass es zwischen dem Licht unterschiedlicher Objektpunkte keine Interferenz gibt und es damit nur eine Kohärenz zwischen unterschiedlichen Lichtstrahlen gibt, die vom gleichen Objektpunkt ausgehen. Hierbei werden die räumlichen Winkel der örtlichen Lage der einzelnen Objektpunkte vermessen, ohne dass die Wellenfront oder eine vergleichbare Größe gemessen wird. Der Grund hierfür ist, dass die Überlappung inkohärenter Quellen (Objektpunkte) ein Strahlungsfeld erzeugt, das keine definierte örtliche Phase aufweist und damit auch keine Wellenfront. Unter einer Wellenfront werden hierbei Punkte gleicher Phasenlage in einem Strahlungsfeld verstanden. Die Vorrichtung ist daher zur interferometrischen Analyse einer Wellenfront oder als holographische Kamera nicht geeignet. Das in DE 10 2014 111 979.7 offenbarte Interferometer weist weder eine Auswerteeinheit noch ein Computerprogrammprodukt auf.

Aus der US Veröffentlichungsschrift US 2004/033426 A1 ist ein Ausrichtungssystem mit einem selbstreferenzierenden Interferometer bekannt. Das dort beschriebene Interferometer erzeugt zwei sich überlappende und relativ gedrehte Bilder einer Ausrichtungsmarkierung. Die Fourier-Transformationen der beiden Bilder werden in einer Bildebene zur Interferenz gebracht und die Intensitäten werden mit Detektoren erfasst. Aus der Phasendifferenz zwischen unterschiedlichen Beugungsordnungen der beiden Bilder wird eine Positionsinformation abgeleitet. Die Veröffentlichung "Digital holography of selfluminous objects by using a Mach-Zehnder setup" von Giancarlo Pedrini et al. (Optics Letters 37, No. 4, Seiten 713-715) beschreibt ein selbstreferenzierendes Interferometer bei dem ein Teil der Wellenfront eines selbstleuchtenden Objekts gefiltert wird und mit der ungefilterten Wellenfront überlagert wird. Die US Patentschrift US 7,499,174 B2 beschreibt linsenlos abbildende Interferometer, welche ein Bild eines lateral ausgedehnten Objekts erzeugen.

Es ist eine Aufgabe der vorliegenden Erfindung, ein Verfahren zur Vermessung eines Lichtfelds mit einem dreidimensionale Interferometer anzugeben. Das Verfahren soll eine interferometrische Bestimmung der örtlichen Phase einer einfallenden Welle erlauben. Hierbei soll diese Bestimmung mit hoher Auflösung erfolgen.

Diese Aufgabe der Erfindung wird gelöst durch ein Verfahren zur Vermessung eines von einem reellen Objekt erzeugten Lichtfeldes gemäß dem Patentanspruch 1. Die abhängigen Patentansprüche definieren vorteilhafte Ausführungsformen.

Das Verfahren soll diese Aufgabe durch einen einfachen, insbesondere kompakten, Aufbau des verwendeten dreidimensionalen Interferometers lösen. Ferner soll das in dem Verfahren verwendete Interferometer kostengünstig hergestellt werden können.

Ein Aspekt betrifft ein Verfahren, welches unter Benutzung des dreidimensionalen Interferometers für mindestens einen Punkt eines Interferenzbereichs des dreidimensionalen Interferometers eine Phasendifferenz zwischen einem ersten elektrischen Feld, welches vom ersten Interferenzarm herrührt, und einem zweiten elektrischen Feld, welches vom zweiten Interferenzarm herrührt, bestimmt.

Ein weiterer Aspekt betrifft ein Verfahren, welches unter Benutzung des dreidimensionalen Interferometers eine Phase eines elektrischen Feldes in einem Teil des Interferenzbereichs des dreidimensionalen Interferometers bestimmt.

Ein weiterer Aspekt betrifft ein Verfahren, welches unter Benutzung des dreidimensionalen Interferometers für mindestens einen Punkt eines Interferenzbereichs des dreidimensionalen Interferometers eine Amplitude eines Interferenzterms oder die Amplitude eines ersten oder zweiten elektrischen Feldes, welches von dem durch den ersten oder zweiten Interferometerarm verlaufenden Lichtfeld herrührt, bestimmt.

Um das im Folgenden beschriebene in dem Verfahren verwendete dreidimensionale Interferometer physikalisch korrekt zu beschreiben, ist es notwendig, das auf das Interferometer einfallende Lichtfeld oder elektrische Feld gemäß allgemeinen physikalischen Gleichungen wie zum Beispiel der Beugungsformeln von Huygens, Rayleigh oder Sommerfeld durch das Interferometer, d.h. sowohl durch den ersten Interferometerarm als auch durch den zweiten Interferometerarm bis zur Detektionsebene zu propagieren, um dann eine Überlagerung dieser beiden Felder auf der Detektionsebene zu berechnen. Es ist jedoch möglich, das Interferometer über Lichtfelder zu charakterisieren, die der geometrischen Näherung genügen.

Die geometrische Optik, welche auch Strahlenoptik genannt wird, ist mathematisch als Grenzfall der Wellenoptik für verschwindend kleine Wellenlänge des Lichts aufzufassen.

Diese Näherung gilt im vorliegenden Fall, wenn die verwendeten Wellenlängen klein gegenüber den Dimensionen der im Interferometer verwendeten Komponenten sind.

Für einen beliebigen Objektpunkt gibt es einen Zentralstrahl. Das Interferometer wird im Hauptanspruch jedoch anhand eines einzigen Zentralstrahls charakterisiert. Der Zentralstrahl hängt von der Wahl des Objektpunktes und der Detektionsebene ab.

Das Interferometer dient der Vermessung eines von einem Objekt erzeugten Lichtfeldes. Hiermit ist insbesondere gemeint, dass zumindest eine Größe eines elektrischen Feldes bestimmt wird. Hierbei steht eine Phase des elektrischen Feldes im Mittelpunkt. Es kann jedoch auch eine Phase und eine Intensität bzw. eine Amplitude des elektrischen Feldes bestimmt werden. Das Interferometer ist insbesondere geeignet, eine Größe eines elektrischen Feldes, sei es eine Phase oder eine Phase und eine Intensität des elektrischen Feldes zu bestimmen. Hierbei kann das elektrische Feld bzw. die Intensität relativ, d.h. im Vergleich zu einer festgelegten Größe, bestimmt werden. In diesem Fall muss eine absolute Größe des elektrischen Feldes bzw. der Intensität nicht bekannt sein. Bevorzugt wird eine Absolutgröße des elektrischen Feldes bzw. der Intensität bestimmt.

Unter einer Wellenfront kann man Punkte gleicher Phase bei der Propagation einer Welle verstehen. Der Begriff Vermessung einer Wellenfront kann hierbei synonym für eine Messung der Phase auf einer Ebene verwendet werden, wobei die Ebene nicht kollinear zur Ausbreitungsrichtung sein darf, da die Punkte gleicher Phase für eine derartige Ebene bedeutungslos wären.

Das Interferometer weist einen ersten Interferometerarm, einen zweiten Interferometerarm, einen Strahlteiler, eine Detektionsebene, und eine Überlappungseinrichtung auf.

Das Licht des zu vermessenden Lichtfeldes ist zumindest teilweise oder partiell kohärent. Das Licht ist besonders bevorzugt kohärentes Licht.

Der Begriff partiell kohärentes Licht ist unter Bezug auf die gewählte Messsituation zu verstehen, bei der im Fall von kohärentem Licht alle zur Überlappung kommenden Wellenanteile zueinander kohärent sind, d.h., es gibt eine zeitlich feste relative Phasenlage. Im Fall von partiell kohärentem Licht gibt es Überlappungen, die zeitlich nicht in einer vollständig festen Phasenbeziehung stehen. Dies tritt auf, wenn der Weglängenunterschied der interferierenden Felder länger als die Kohärenzlänge ist. Durch eine Veränderung der Pfaddifferenz zwischen den Armen des Interferometers ist es möglich, die beiden zur Überlappung kommenden Felder mehr oder weniger in den Kohärenzbereich zu schieben.

Insbesondere ist es so, dass ein und dieselbe Wellenfront bei einem bestimmten Interferometeraufbau noch als kohärentes Lichtfeld betrachtet werden kann, während sie bei einem anderen Interferometeraufbau als teilweise kohärente Lichtquelle betrachtet werden muss. Der hierfür ursächliche Unterschied im Interferometeraufbau ist, ob die Weglängenunterschiede zwischen den beiden Interferometerarmen länger oder kürzer als die Kohärenzlänge der Lichtquelle sind. Die Kohärenzlänge ist eine Eigenschaft einer Lichtquelle bzw. eines Lichtfeldes.

Bevorzugt sind die im Interferometeraufbau auftretenden Weglängenunterschiede, gemessen für Strahlen des Strahlenbündels des Referenzpunktes, kürzer als die Kohärenzlänge des einfallenden Lichtfeldes.

Der erste Interferometerarm ist so einrichtbar oder justierbar, dass durch ihn ein erstes Strahlenbündel verläuft. Der zweite Interferometerarm ist so einrichtbar oder justierbar, dass durch ihn ein zweites Strahlenbündel verläuft. Bevorzugt ist der erste Interferometerarm so eingerichtet, so dass durch ihn ein erstes Strahlenbündel verläuft. Bevorzugt ist der zweite Interferometerarm so eingerichtet, so dass durch ihn ein zweites Strahlenbündel verläuft. Hierbei wird der Begriff, dass ein Strahlenbündel durch einen Interferometerarm oder eine Vorrichtung verläuft, bevorzugt so verstanden, dass keiner der Strahlen des Strahlenbündels durch ein Hindernis blockiert oder vignettiert wird. Bevorzugt wird kein Strahlenbündel im Interferometer vignettiert. Der hier verwendete Begriff des Strahlenbündels bezieht sich auf die Beschreibungsweise des Interferometers im Sinne des Hauptanspruchs. Ein Strahlenbündel, wie es im Zusammenhang mit dem erfindungsgemäßen Verfahren im hinteren Teil dieser Anmeldung beschrieben wird, kann ebenso wie ein Strahlenbündel, welches in dem Interferometer real verwendet wird, im allgemeinen von einem Hindernis blockiert oder vignettiert werden.

Bevorzugt unterscheidet sich der zweite Interferometerarm zwischen dem Strahlteiler und der Überlappungseinrichtung an jedem Punkt vom ersten Interferometerarm.

Der Strahlteiler ist zwischen einem Objektpunkt des Objekts einerseits und dem ersten Interferometerarm und dem zweiten Interferometerarm andererseits angeordnet. Hierbei ist der Strahlteiler so eingerichtet, dass ein von dem Objektpunkt ausgehendes Strahlenbündel am Strahlteiler in das erste Strahlenbündel und das zweite Strahlenbündel aufgespalten wird. Der Strahlteiler hat die Funktion, das vom Objekt kommende Lichtfeld bzw. das vom Objektpunkt kommende Strahlenbündel in zwei Lichtfelder bzw. Strahlenbündel aufzuspalten, welche dann durch die beiden Interferometerarme laufen und an der Überlappungseinrichtung so zusammengeführt werden, dass die beiden Lichtfelder bzw. Strahlenbündel im Interferenzbereich der Detektionsebene zur Interferenz kommen. Das Lichtfeld wird in dem Interferometer durch Amplitudensplitting vermessen; ein Wellenfrontsplitting findet bezogen auf den Zentralstrahl nicht statt.

Der Strahlteiler kann auch ein diffraktives optisches Element (DOE), insbesondere ein Gitter, aufweisen oder aus einem solchen bestehen. Ein DOE kann beispielsweise als Strahlteiler fungieren, wenn der auf das DOE einfallende Strahl in die erste und minus-erste Ordnung gebeugt und die nullte Ordnung nahezu unterdrückt oder nicht verwendet wird. Hierbei ist die Intensität in der ersten und minus-ersten Ordnung bevorzugt ungefähr gleich.

Um eine Interferenz messen zu können, muss die optische Weglängendifferenz zwischen den beiden Interferometerarmen kleiner als die entsprechende Kohärenzlänge der verwendeten Strahlung sein.

Unter der optischen Weglänge versteht man das Integral des Brechungsindexes entlang der von der Strahlung zurückgelegten Strecke. Falls der Brechungsindex entlang dieses Weges konstant ist, ist die optische Weglänge gleich dem Produkt aus dem Brechungsindex und der Wegstrecke der zurückgelegten Strecke.

Das Objekt ist erfindungsgemäss ein reelles Objekt oder kann in einer nicht beanspruchten Alternative ein virtuelles Objekt sein.

Der Objektpunkt kann ein beliebiger Punkt des Objektes sein. Zur Beschreibung des Interferometers wird ohne Beschränkung der Allgemeinheit ein bestimmter Objektpunkt gewählt, welcher auch Referenzpunkt genannt wird. Der Referenzpunkt ist so gewählt, dass er im Gesichtsfeld, bevorzugt in der Mitte des Gesichtsfeldes, liegt.

Die Detektionsebene ist nach dem ersten Interferometerarm und dem zweiten Interferometerarm angeordnet. Die Detektionsebene ist so einrichtbar oder justierbar, bevorzugt so eingerichtet, dass auf ihr das erste Strahlenbündel und das zweite Strahlenbündel in einem Interferenzbereich zur Interferenz gebracht werden. Hierbei ist der Interferenzbereich ein Teilbereich der Detektionsebene. Bevorzugt kann der Interferenzbereich auch identisch mit der Detektionsebene sein. Bevorzugt ist der Überlapp des vom ersten Strahlenbündel beleuchteten Bereichs der Detektionsebene und des vom zweiten Strahlenbündel beleuchteten Bereichs der Detektionsebene möglichst groß, bevorzugt ist der vom ersten Strahlenbündel beleuchtete Bereich identisch mit dem vom zweiten Strahlenbündel beleuchtete Bereich. Je größer der Überlapp der beiden Strahlenbündel auf der Detektionsebene ist, desto mehr Informationen erhält man über die Interferenz der beiden Strahlenbündel.

Der Interferenzbereich ist der Bereich der Detektionsebene, in dem sich das erste Strahlenbündel und das zweite Strahlenbündel überschneiden. Somit gibt es einen Bereich auf der Detektionsebene, welcher vom ersten Strahlenbündel getroffen wird, jedoch nicht vom zweiten Strahlenbündel und es gibt einen weiteren Bereich auf der Detektionsebene, welcher vom zweiten Strahlenbündel getroffen wird, jedoch nicht vom ersten Strahlenbündel.

Die Detektionsebene ist eben. Die Detektionsebene kann jedoch gemäß einer anderen Ausführungsform durch eine Detektionsfläche ersetzt sein, welche nicht eben, sondern gekrümmt ist.

Die Überlappungseinrichtung ist zwischen der Detektionsebene einerseits und dem ersten Interferometerarm und dem zweiten Interferometerarm andererseits angeordnet.

Bevorzugt sind der Strahlteiler und die Überlappungseinrichtung zwei getrennte Vorrichtungen.

Die Überlappungseinrichtung ist keine Umkehr des Strahlteilers. Dies kann man daran sehen, dass ein auf den Strahlteiler einfallender Lichtstrahl direkt nach dem Strahlteiler in zwei Lichtstrahlen aufgespalten ist, jedoch zwei auf die Überlappungseinrichtung einfallende Lichtstrahlen in der Regel direkt nach der Überlappungseinrichtung nicht zu einem einzigen Lichtstrahl werden. Vielmehr hat die Überlappungseinrichtung den Zweck, zwei auf sie einfallende Lichtstrahlen oder allgemeiner gesagt Lichtfelder bzw. Strahlenbündel so umzulenken, dass diese in dem Interferenzbereich der Detektionsebene zur Interferenz gebracht werden.

Es wurde ausgesagt, dass zwei auf die Überlappungseinrichtung einfallende Lichtstrahlen in der Regel direkt nach der Überlappungseinrichtung nicht zu einem einzigen Lichtstrahl werden. Es gibt hierbei jedoch eine Ausnahme für den Fall, dass der Zentralstrahl von einem zentralen Objektpunkt emittiert wird. Gibt es eine Lage eines Objektpunktes, bei dem eine Gleichheit der auf die Detektionsebene fallenden Strahlenbündel erreicht wird, so nennt man diesen Punkt zentralen Objektpunkt. Es kann gezeigt werden, dass der zentrale Objektpunkt eindeutig ist. Er muss jedoch nicht im Gesichtsfeld des verwendeten Interferometers liegen. Der zentrale Objektpunkt ist ein Punkt, für den gilt, dass der von diesem Punkt ausgehende Zentralstrahl nach der Überlappungseinrichtung einen ersten und einen zweiten Zentralstrahl erzeugt, die die gleiche Ausbreitungsrichtung haben, d.h. sich überlagern.

Die Überlappungseinrichtung kann beispielsweise ein DOE aufweisen. Hierbei kann das DOE umgekehrt zur normalen Strahlführung benutzt werden. Es können, zum Beispiel, die erste und minus-erste Beugungsordnung als die beiden zusammenzuführenden Strahlen und ein für gewöhnlich einfallender Strahl als ausfallender zusammengeführter Strahl benutzt werden. Hierbei ist jedoch zu beachten, dass aufgrund der Asymmetrie zwischen dem Strahlteiler und der Überlappungseinrichtung im Allgemeinen für den Strahlteiler und die Überlappungseinrichtung nicht dasselbe DOE benutzt werden kann.

Unter einem Strahlenbündel versteht man in der vorliegenden Anmeldung gemäß der geometrischen Optik eine Anzahl von von einem Punkt, insbesondere dem Objektpunkt, ausgehenden Strahlen. Bevorzugt hat das Strahlenbündel von diesem Punkt aus gesehen einen kleinen Öffnungswinkel, welcher kleiner als 5° ist. Weitere bevorzugte Werte sind 2°, 1°, 0,5° und 0,1°.

Diese Definition gilt lediglich für das Strahlenbündel, welches für die Beschreibung des Interferometers nach dem Hauptanspruch und gemäß der alternativen Formulierung anzuwenden ist.

Für die Beschreibung des vorliegenden Hauptanspruchs sollen jedoch lediglich solche Strahlenbündel betrachtet werden, welche von einem gewählten Punkt, zum Beispiel dem Referenzpunkt, ausgehen und welche für den gewählten Objektpunkt auf die Detektionsebene treffen. Dies stellt keine Einschränkung dar; man kann ohne Einschränkung einen Referenzpunkt und ein ausreichend kleines Strahlenbündel wählen, so dass dies immer zutrifft. Es ist zu beachten, dass z.B. das von dem Objektpunkt ausgehende Strahlenbündel aufgrund von Abbildungsfehlern die Eigenschaft, dass die Strahlen des Bündels von einem Punkt ausgehen, nach der Propagation oder Reflexion an Strahlumlenkelementen nicht mehr hat. Die Gesamtheit dieser Strahlen soll jedoch trotzdem als Strahlenbündel bezeichnet werden.

Ferner sind der Strahlteiler, der erste Interferometerarm, der zweite Interferometerarm, die Überlappungseinrichtung und die Detektionsebene so einrichtbar oder justierbar, bevorzugt so eingerichtet, dass die nachfolgenden Bedingungen erfüllt sind. Diese nachfolgend aufgeführten Bedingungen sind Einschränkungen für die gegenseitige Positionierung des Strahlteilers, des ersten Interferometerarms, des zweiten Interferometerarms, der Überlappungseinrichtung und der Detektionsebene.

Die erste Bedingung lautet, dass der Strahlteiler, der erste Interferometerarm, der zweite Interferometerarm, die Überlappungseinrichtung und die Detektionsebene so einrichtbar oder justierbar, bevorzugt so eingerichtet sind, dass es zu einem Objektpunkt des Objektes genau einen von dem Objektpunkt ausgehenden Zentralstrahl gibt, welcher an dem Strahlteiler in einen ersten Zentralstrahl und einen zweiten Zentralstrahl aufgespalten wird. Hierbei ist der Zentralstrahl Teil des Strahlenbündels, der erste Zentralstrahl ist Teil des ersten Strahlenbündels und durchläuft den ersten Interferometerarm und der zweite Zentralstrahl ist Teil des zweiten Strahlenbündels und durchläuft den zweiten Interferometerarm. Ferner überlappen der erste Zentralstrahl und der zweite Zentralstrahl auf der Detektionsebene in dem Interferenzbereich in einem zentralen Bildpunkt.

Bei gegebenem Objektpunkt und bei gegebener Lage der Detektionsebene hat jedes von diesem Objektpunkt ausgehende Strahlenbündel einen eindeutig definierten Zentralstrahl, der wie folgt gefunden werden kann: man sucht denjenigen Lichtstrahl des Strahlenbündels, der am ersten Strahlteiler in den ersten Zentralstrahl und den zweiten Zentralstrahl aufgespalten wird und die nach der Überlappungseinrichtung auf der Detektionsebene im Interferenzbereich in einem Punkt überlappen.

Der Begriff des Überlappens zweier Lichtstrahlen ist so definiert, dass zwei Lichtstrahlen dann überlappen, wenn sie durch einen gemeinsamen Punkt laufen, wobei jedoch die Richtung der einzelnen Lichtstrahlen nicht identisch sein muss, jedoch sein kann. Man kann demnach auch sagen, dass beim Überlappen zweier Lichtstrahlen die Richtungen keine Relevanz haben. Der Begriff des Überlagerns von zwei Lichtstrahlen ist ein Spezialfall des Überlappens, in dem die beiden Lichtstrahlen durch einen gemeinsamen Punkt laufen und die jeweiligen Ausbreitungsrichtungen in diesem gemeinsamen Punkt identisch sind. Hieraus folgt, dass zwei sich überlagernde Lichtstrahlen ebenfalls überlappen. Jedoch gilt nicht, dass zwei sich überlappende Lichtstrahlen in jedem Fall auch überlagern.

Experimentell kann der Zentralstrahl und damit der zentrale Bildpunkt wie folgt gefunden werden. Ausgangslage ist, dass der für die Konstruktion gewählte Objektpunkt ein Strahlenbündel aussendet. Dieses Strahlenbündel wird durch eine verschiebbare Blende, z.B. eine Lochblende, (oder äquivalent eine optische "Marke", "Hindernis", "Schirm") im Strahlengang zwischen Objektpunkt und den beiden Interferometerarmen auf ein Teilbündel eingeschränkt. Das Teilbündel führt über den ersten Interferometerarm und den zweiten Interferometerarm zu einer Teilbeleuchtung der Detektionsebene, d.h. einer Einschränkung der Beleuchtung im Überlappungsbereich des nicht eingeschränkten Strahlenbündels. Falls das eingeschränkte Strahlenbündel noch den Zentralstrahl enthält, so gibt es trotz Einschränkung noch eine Überlappung. Falls das eingeschränkte Strahlenbündel den Zentralstrahl nicht mehr enthält, gibt es keine Überlappung der Teilstrahlenbündel mehr, wenn man von möglichen Beugungseffekten an der Blende absieht. Durch weiteres Verschieben der Blende kann man erreichen, dass der Zentralstrahl in die Blende aufgenommen wird und es zur Überlappung kommt. Somit kann die Lage des Zentralstrahls und des zentralen Bildpunktes experimentell bestimmt werden.

Es soll nochmals betont werden, dass die Lage des Zentralstrahls vom gewählten Objektpunkt abhängt. Ferner wird betont, dass eine Wahl des Objektpunktes zu einer eindeutigen Charakterisierung des Interferometers führt. Eine andere Wahl des Objektpunktes führt zu einer anderen eindeutigen Charakterisierung des Interferometers.

Im Folgenden sollen zweidimensionale von dreidimensionalen Interferometern abgegrenzt werden. Da Interferometer mit zwei Interferometerarmen betrachtet werden, werden eindimensionale Interferometer wie zum Beispiel das Fabry-Pérot-Interferometer nicht berücksichtigt. Somit sind, wenn man von Interferometern mit zwei Interferometerarmen spricht, lediglich Interferometer denkbar, welche zweidimensional oder dreidimensional sind.

In der vorliegenden Anmeldung werden zwei Definitionen von zweidimensionalen Interferometern gegeben. Interferometer, welche nicht unter diese beiden Definitionen fallen, werden als dreidimensionale Interferometer angesehen.

Gemäß der ersten Definition sind die Mitten der Elemente, insbesondere der Strahlumlenkelemente, eines zweidimensionalen Interferometers in einer Ebene angeordnet.

Hierbei wird ein Strahlteiler oder eine Überlappungseinrichtung ebenfalls als Strahlumlenkelement angesehen.

Gemäß der zweiten Definition handelt es sich dann um ein zweidimensionales Interferometer, wenn es einen Referenzpunkt gibt, für den eine erste Ebene oder Einfallsebene, welche durch den ersten und zweiten Zentralstrahl unmittelbar nach dem Strahlteiler definiert ist, identisch mit einer zweiten Ebene oder Ausfallsebene ist, welche durch den ersten und zweiten Zentralstrahl unmittelbar vor der Überlappungseinrichtung definiert ist.

Alle Interferometer, die unter eine der oben genannten Definitionen fallen, werden als zweidimensionale Interferometer betrachtet. Alle anderen Interferometer werden somit als dreidimensionale Interferometer angesehen.

Die Näherung, welche bei der Beschreibung des Interferometers verwendet wird, kann an dieser Stelle genauer beschrieben werden. Anstatt ein kompliziertes Lichtfeld gemäß dem Huygensschen Prinzip durch das Interferometer zu propagieren, sind folgende Näherungen getroffen worden. Man verwendet ein idealisiertes Lichtfeld, welches von einem gewählten Referenzpunkt ausgeht. Es wurde gezeigt, dass für einen gegebenen Referenzpunkt und eine gegebene Detektionsebene der zentrale Bildpunkt und der Zentralstrahl, d.h. auch der erste Zentralstrahl und der zweite Zentralstrahl, eindeutig bestimmt sind.

Zudem verwendet man eine skalare Theorie, insbesondere eine skalare Beugungstheorie, für die die Helmholtz-Gleichung der Optik gilt, d.h. Polarisationseffekte werden nicht betrachtet. Diese Vorgehensweise ist insbesondere für unpolarisiertes Licht korrekt, sowie, falls nur eine Polarisation vorliegt, wenn das Interferometer die Polarisation zwischen dem ersten elektrischen Feld auf der Detektionsebene und dem zweiten elektrischen Feld auf der Detektionsebene nicht dreht. Dies ist die bevorzugte Konfiguration und kann, soweit sie nicht vorliegt, durch ein zusätzliches polarisationsdrehendes Element im Strahlengang des ersten oder zweiten Interferometerarms herbeigeführt werden.

Unter diesen Voraussetzungen kann man nun das erste elektrische Feld auf der Detektionsebene entlang dem ersten Zentralstrahl bis zum Strahlteiler zurück propagieren und dann wieder vorwärts entlang dem zweiten Zentralstrahl bis auf die Detektionsebene propagieren, um das zweite elektrische Feld zu erhalten. In dieser Näherung kann man also für eine gegebene Geometrie, d.h. für einen gegebenen Aufbau eines Interferometers, aus einem gegebenen ersten elektrischen Feld auf der Detektionsebene das zweite elektrische Feld auf der Detektionsebene berechnen. Bei gegebenem erstem und zweitem elektrischem Feld kann man auch berechnen, wie sich die beiden elektrischen Felder ineinander transformieren.

Im Fall eines gewählten Referenzpunktes kann für jeden Bildpunkt BP1 des Interferenzbereichs das durch den ersten Interferometerarm propagierte elektrische Feld als Feld E1 am Bildpunkt BP1 bezeichnet werden. In der geometrischen Näherung rührt das Feld E1 am Punkt BP1 von dem Lichtstrahl, der vom Referenzpunkt nach BP1 verläuft. Der Teil dieses Lichtstrahls vor dem Strahlteiler wird am Strahlteiler in zwei Strahlen aufgeteilt, wovon der erste Lichtstrahl über den ersten Interferometerarm bis zum Punkt BP1 verläuft, und wovon der zweite Lichtstrahl durch den zweiten Interferometerarm die Detektionsebene an einem anderen Bildpunkt, welcher BP2 genannt wird, erreicht. Der zweite Lichtstrahl erzeugt am Punkt BP2 das Feld E2. Bis auf Pfadlängenunterschiede, und im Rahmen der geometrischen Näherung ist das Feld E1 am Punkt BP1 und das Feld E2 am Punkt BP2 identisch, da die Felder aus dem gleichen Teilstrahl vor dem Strahlteiler stammen. Werden für die optischen Elemente im Interferometer die Näherung der paraxialen Optik, auch Gaußsche Optik oder Optik erster Ordnung angewandt, so kann die Abbildung von dem im Interferenzbereich beliebig gewählten Punkt BP1 auf den Punkt BP2, welcher eine eindeutig Funktion des Punktes BP1 ist, im allgemeinsten Fall eine projektive Abbildung sein. Insbesondere kann die projektive Abbildung affine Abbildung sein.

Hierbei ist eine projektive Abbildung P in zwei Dimensionen wie folgt definiert.

Jeder Punkt im Ursprungsraum und im Bildraum ist gegeben durch zwei Koordinaten x, y und x' und y'. Für die Zwecke der projektiven Abbildung wird jedes 2-er Tupel ergänzt durch eine dritte Komponente mit 1, d.h. zu jedem Punkt gehört ein Vektor mit drei Komponenten (x,y,1) bzw. (x',y',1).

Alle Punkte, die sich durch Multiplikation mit einer Zahl $\lambda$ ergeben, gelten als äquivalent, d.h. (x,y,1) ist äquivalent zu $(\lambda x, \lambda y, \lambda)$.

Jeder dreidimensionale Vektor kann in die Form gebracht werden, dass die dritte Komponente 1 ist, und man damit den (x,y,)-Wert in einem zweidimensionalen Koordinatensystem ablesen kann.

Die projektive Abbildung P ist mathematisch gesehen eine Abbildung von dem dreidimensionalen Raum in den dreidimensionalen Raum. Da man jedoch eine Abbildung in zwei Dimensionen betrachtet, ergänzt man den zweidimensionalen Punkt (x,y) um die dritte Koordinate mit 1, so dass man ihn wie folgt schreiben kann: (x,y,1). Abschließend wendet man die 3x3 Matrix P an und bringt das Ergebnis wieder in die Form (x',y',1). Das Koordinatenpaar (x',y') ist das Ergebnis der projektiven Abbildung. Somit kann man die transformierten Koordinaten schreiben als:

$$x' = (p11\ x + p12\ y + p13) / (p31\ x + p32\ y + p33)$$

$$y' = (p21\ x + p22\ y + p23) / (p31\ x + p32\ y + p33)$$

wobei $p_{ij}$ (i und j sind Zahlen von 1 bis 3) die 3x3, also insgesamt 9 Indizes der Matrix P sind. Siehe dazu auch Born / Wolf, Principles of Optics, Cambridge University Press, 7. Auflage, Kapitel 4.3.1.

Die zweite Bedingung lautet, dass der Strahlteiler, der erste Interferometerarm, der zweite Interferometerarm, die Überlappungseinrichtung und die Detektionsebene so einrichtbar oder justierbar, bevorzugt so eingerichtet sind, dass es für jeden Lichtstrahl, welcher von dem Objektpunkt des Objektes ausgeht und Teil des Strahlenbündels ist, jedoch nicht der Zentralstrahl ist, einen ersten den ersten Interferometerarm durchlaufenden Lichtstrahl und einen zweiten den zweiten Interferometerarm durchlaufenden Lichtstrahl gibt, welche an dem Strahlteiler aus dem Lichtstrahl aufgespalten werden und welche die Detektionsebene an unterschiedlichen Punkten treffen. Hierbei sind der erste Lichtstrahl Teil des ersten Strahlenbündels und der zweite Lichtstrahl Teil des zweiten Strahlenbündels.

Hierbei ist zu beachten, dass der erste Lichtstrahl und der zweite Lichtstrahl nicht in jedem Fall in den Interferenzbereich treffen. Es gibt darüber hinaus Fälle, in denen entweder der erste Lichtstrahl oder der zweite Lichtstrahl nicht im Interferenzbereich auftreffen.

Gemäß einer Ausführungsform des Interferometers weist dieses mindestens zwei in der zweiten Bedingung erwähnte unterschiedliche Punkte der Detektionsebene auf, deren gegenseitiger Abstand größer als 1/1000, bevorzugt 1/100 und noch weiter bevorzugt 1/10 der größten Ausdehnung des zur Detektion benutzen Anteil der Detektionsebene oder des Detektors ist. Das Interferometer weist bevorzugt unendlich viele solcher Punkte auf.

Für den Fall, dass das Interferometer einen Detektor in der Detektionsebene aufweist, welcher in Pixel aufgeteilt ist, weist das Interferometer mindestens zwei in der zweiten Bedingung erwähnte unterschiedliche Punkte der Detektionsebene auf, deren gegenseitiger Abstand größer als 1 Pixel, bevorzugt 10 Pixel und noch weiter bevorzugt 100 Pixel der Detektorausdehnung ist.

Gemäß einer Ausführungsform des Interferometers weisen 1% aller Punkte des Interferenzgebietes diese Eigenschaft auf. Bevorzugt sind es 5% aller Punkte des Interferenzgebietes, die diese Eigenschaft aufweisen. Weitere bevorzugte Werte sind 10%, 25% und 50% der Punkte des Interferenzgebietes. Falls die Detektionsebene eine Pixelrasterung aufweist, kann diese Bedingung analog auf die Anzahl der Pixel angewendet werden.

Die zweite Bedingung ist für jeden Lichtstrahl definiert, welcher vom Objektpunkt des Objektes ausgeht und Teil des Strahlenbündels, jedoch nicht der Zentralstrahl ist. Die somit beschriebenen Lichtstrahlen sind im Allgemeinen unendlich viele, die in unendlich vielen Punkten auf die Detektionsebene treffen. Hierbei trifft der erste Lichtstrahl die Detektionsebene in unendlich vielen Punkten und auch der zweite Lichtstrahl trifft die Detektionsebene in unendlich vielen Punkten. Durch die zweite Bedingung wird für jeden Lichtstrahl, der am Strahlteiler in den ersten und zweiten Lichtstrahl aufgespalten wird, einen Zuordnung getroffen, welche einem ersten Punkt auf der Detektionsebene, welcher vom ersten Lichtstrahl getroffen wird, einen zweiten Punkt auf der Detektionsebene, welcher vom zweiten Lichtstrahl getroffen wird, zuordnet. Somit ergibt sich eine Abbildung von unendlich vielen ersten Punkten, welche von jeweils einem ersten Lichtstrahl getroffen werden, zu unendlich vielen zweiten Punkten, welche jeweils von einem zweiten Lichtstrahl getroffen werden. Diese Abbildung ist eine bijektive, d.h. eine eindeutig umkehrbare Abbildung, eines ersten Bereichs der Detektionsebene auf einen zweiten Bereich der Detektionsebene. Diese bijektive Abbildung wird untenstehend im Zusammenhang mit einer alternativen Formulierung des Hauptanspruchs näher erläutert.

Die dritte Bedingung lautet, dass der Strahlteiler, der erste Interferometerarm, der zweite Interferometerarm, die Überlappungseinrichtung und die Detektionsebene so einrichtbar oder justierbar, bevorzugt so eingerichtet sind, dass es zu jedem Bildpunkt des Interferenzbereichs, welcher nicht der zentrale Bildpunkt ist, genau einen dritten Lichtstrahl gibt, welcher von dem Objektpunkt ausgeht, nicht der Zentralstrahl ist, den ersten Interferometerarm durchläuft und den Bildpunkt auf der Detektionsebene trifft, und genau einen vierten Lichtstrahl gibt, welcher von dem Objektpunkt ausgeht, vor dem Strahlteiler nicht der dritte Lichtstrahl ist, nicht der Zentralstrahl ist, den zweiten Interferometerarm durchläuft und mit dem dritten Lichtstrahl an dem Bildpunkt auf der Detektionsebene überlappt.

Der dritte Lichtstrahl und der vierte Lichtstrahl sind vor dem Strahlteiler Teil des Strahlenbündels. Im ersten Interferometerarm ist der dritte Lichtstrahl Teil des ersten Strahlenbündels. Im zweiten Interferometerarm ist der vierte Lichtstrahl Teil des zweiten Strahlenbündels.

Die Lagen des dritten und des vierten Lichtstrahls hängen von der Wahl des Objektpunkts bzw. des Referenzpunkts ab.

Der Gegenstand des Hauptanspruchs der vorliegenden Erfindung, welcher vorstehend beschrieben wurde, kann ebenfalls durch eine alternative Formulierung beschrieben werden. Diese alternative Formulierung ist anschaulicher als die vorstehend dargelegte erste Formulierung. Da jedoch nicht klar ist, welche Formulierung allgemeiner ist, soll die alternative Formulierung hier auch dargelegt werden und beide sollen vorerst als äquivalent angesehen werden.

Das Interferometer gemäß der alternativen Formulierung wird nachfolgend beschrieben. Um das Interferometer gemäß der alternativen Formulierung vom zuerst beschriebenen Interferometer zu unterscheiden, wird es alternatives Interferometer genannt, wohingegen das letztere als das erste oder das zuerst beschriebene Interferometer bezeichnet wird.

Das alternative Interferometer weist ebenso wie das erste Interferometer einen ersten Interferometerarm, einen zweiten Interferometerarm, einen Strahlteiler, eine Detektionsebene, und eine Überlappungseinrichtung auf.

Die Merkmale des alternativen Interferometers und des zuerst beschriebenen Interferometers stimmen überein bis auf die Beschreibung der gegenseitigen Positionierung des Strahlteilers, des ersten Interferometerarms, des zweiten Interferometerarms, der Überlappungseinrichtung und der Detektionsebene. Diese Merkmale wurden im Zusammenhang mit dem zuerst beschriebenen Interferometer als drei Bedingungen formuliert. Im Folgenden wird die alternative Darstellung für die Gesamtheit dieser drei Bedingungen dargelegt.

Beim alternativen Interferometer sind der Strahlteiler, der erste Interferometerarm, der zweite Interferometerarm, die Überlappungseinrichtung und die Detektionsebene so einrichtbar oder justierbar, bevorzugt so eingerichtet, dass ein erstes elektrisches Feld, welches von dem ersten Strahlenbündel herrührt, auf der Detektionsebene und ein zweites elektrisches Feld, welches von dem zweiten Strahlenbündel herrührt, auf der Detektionsebene, durch eine projektive Abbildung P ineinander überführbar, wobei die projektive Abbildung P im Interferenzbereich genau einen Fixpunkt aufweist, welcher zentraler Bildpunkt genannt wird.

Sowohl für die Beschreibung des zuerst beschriebenen Interferometers als auch für die Beschreibung des alternativen Interferometers gilt die Näherung der geometrischen Optik. Für die Beschreibung des alternativen Interferometers wird jedoch zusätzlich die Näherung der Gaußschen Optik, welche auch paraxiale Optik oder Optik erster Ordnung genannt wird, benötigt, da andernfalls das Verhältnis des ersten und zweiten elektrischen Feldes nicht durch eine projektive Abbildung beschrieben werden kann.

Eine Aufgabe der Erfindung wird in der alternativen Formulierung durch eine effiziente und kontrollierte Überlagerung von zwei elektrischen Feldern erreicht, die über den ersten bzw. zweiten Interferometerarm propagiert werden. Hierbei ist es ein Ziel, bei festem Strahlenbündeldurchmesser den Interferenzbereich auf der Detektionsebene zu maximieren, d.h. Bereiche, wo nur das eine Feld vorliegt, zu minimieren. Dies ist vergleichbar mit der Aufgabe, eine Kreisscheibe mit sich selbst möglichst gut zur Deckung zu bringen, ohne dass gleiche Punkte auf gleichen Punkten liegen. Dadurch kann man die Interferenzinformation maximieren. Die bei dem hier beschriebenen Verfahren gewählte Methode ist unter anderem eine Rotation der beiden Strahlungsfelder gegeneinander. Eine derartige Abbildung ist charakterisiert durch die Drehachse, womit die projektive Abbildung genau einen Fixpunkt haben muss, im Gegensatz zu einer reinen Verschiebung der beiden elektrischen Felder, die zu größeren Bereichen führt, wo es keine Überlappung geben kann. Eine reine Verschiebung der beiden elektrischen Felder gegeneinander hat keinen Fixpunkt. Eine Kombination einer

EP 3 420 328 B1

Verschiebung und einer anschließenden Rotation um einen festen Punkt hat ebenfalls einen Fixpunkt.

Hieran kann man erkennen, dass mit der gewählten Technik des einen Fixpunktes größere Orts-Unterscheide zwischen dem Lichtfeld durch den ersten und zweiten Interferometerarm erreicht werden können, als bei einer Vorrichtung ohne Fixpunkt.

Zudem ist erkennbar, dass mehrere oder unendlich viele Fixpunkte bedeuten, dass dort das Lichtfeld durch den ersten und zweiten Interferometerarm zum gleichen Aufpunkt auf der Wellenfront zur Überlappung kommt, d.h. der dazugehörige Lichtstrahl zwar aufgespalten wird, aber mit sich selbst wieder zur Überlappung gebracht wird. Hieraus kann aber keine Phaseninformation zum einfallenden Lichtfeld gezogen werden, denn dieses Signal ist unabhängig von der Phasenlage des Betrachtungspunktes, es ist nur abhängig vom Wegunterschied.

Zusammenfassend kann man feststellen, dass bei genau einem Fixpunkt ein Maximum der Interferenzinformation erreicht wird.

Die projektive Abbildung P ist bevorzugt eindeutig umkehrbar, d.h. bijektiv. Dies gilt zumindest in einem Teilbereich der Detektionsebene, bevorzugt auf der ganzen Detektionsebene.

Die projektive Abbildung P hängt von der Wahl des Referenzpunkts ab.

Da die beiden elektrischen Felder, d.h. das erste elektrische Feld E1 und das zweite elektrische Feld E2 am Strahlteiler identisch sind, kann man für die elektrischen Felder auf der Detektionsebene schreiben:

$$E_2(x_2) = \gamma \cdot E_1(x_1) \qquad (1),$$

wobei der konstante komplexe Faktor $\gamma$ die Tatsache berücksichtigt, dass die Abschwächungsfaktoren in den Interferometerarmen unterschiedlich sein können. Falls die Abschwächungsfaktoren in den Interferometerarmen identisch sind, ist der Betrag des Faktors $\gamma$ gleich 1. Die Funktionen E2 und E1 sind komplexe Funktionen. In der hier betrachteten Näherung sind die elektrischen Felder keine Vektorfelder, sondern Skalarfelder. Das bedeutet, dass das elektrische Feld eine Funktion ist, welche einem dreidimensionalen Ortsvektor x eine komplexe Funktion zuordnen.

Die Gleichung (1) gilt jedoch nicht nur für einzelne Werte von $x_2$ und $x_1$, sondern für unendlich viele solcher Werte. Hierbei stellt die Abbildung P: $x_1 \rightarrow x_2$ eine projektive Abbildung dar. Dies kann als Funktion wie folgt geschrieben werden:

$$x_2 = P(x_1) \qquad (2)$$

Die projektive Abbildung hat im Interferenzbereich genau einen Fixpunkt $x_{1F}$, d.h. für diesen Punkt gilt:

$$x_2 = P(x_{1F}) = x_{1F} \qquad (3)$$

Die projektive Abbildung hängt vom gewählten Objektpunkt bzw. Referenzpunkt ab.

Bei einem realen Interferometer sind gegebenenfalls Vignettierungseffekte der optischen Komponenten an den Strahlumlenkelementen zu berücksichtigen. Bei den hier betrachteten Interferometern wird angenommen, dass die Strahlenbündel so klein gewählt sind, dass keine Vignettierungseffekte an den optischen Komponenten bzw. den Strahlumlenkelementen auftreten.

Der Gegenstand des Hauptanspruchs ist in der alternativen Formulierung sehr einfach zu verstehen. Es wird das Lichtfeld bzw. das elektrische Feld, so wie es auf den Strahlteiler fällt, in zwei den Interferometerarmen entsprechende Pfade aufgespalten, um dann die beiden in den Interferometerarmen befindlichen Lichtfelder auf der Detektionsebene kontrolliert zu überlagern, indem man die beiden Lichtfelder kontrolliert gegeneinander verschiebt und verdreht. Eine solche Transformation ist im Allgemeinen eine projektive Abbildung. Dadurch, dass der geometrische Aufbau des Interferometers genau bekannt ist, ist ebenfalls genau bekannt, wie die beiden Lichtfelder ineinander transformiert werden. Dies erlaubt es in sehr exakter Weise, ein auf das Interferometer auftreffendes Lichtfeld zu vermessen. Die vorliegende Erfindung macht es möglich, das auf das erfindungsgemäße Interferometer fallende Lichtfeld in der Phase absolut bis auf eine additive Konstante zu bestimmen.

Bevorzugt weist das Interferometer eine Auswerteeinheit auf, welche eingerichtet ist, für mindestens einen Punkt des Interferenzbereichs der Detektionsebene eine Phasendifferenz zwischen den beiden dort interferierenden Lichtstrahlen und/oder eine Phase eines dort auftreffenden Lichtstrahls zu bestimmen bzw. zu messen. Details zum Auswerteverfahren werden im Zusammenhang mit dem erfindungsgemäßen Verfahren untenstehend beschrieben. Die Bestimmung einer Phase ist im Allgemeinen bis auf eine additive Konstante möglich.

Bevorzugt ist die Auswerteeinheit so eingerichtet, dass für mehrere Punkte des Interferenzbereichs eine Phasendifferenz zwischen den beiden dort interferierenden Lichtstrahlen und/oder eine Phase eines dort auftretenden Lichtstrahls bestimmt bzw. gemessen wird.

Alternativ oder zusätzlich zur Auswerteeinheit weist das Interferometer bevorzugt ein Computerprogrammprodukt auf, das in einem in einem Computer einsetzbaren Medium gespeichert ist, umfassend computerlesbare Programmmittel, mit denen ein Computer ein untenstehend beschriebenes erfinderisches Verfahren ausführen kann. Das erwähnte Verfahren ist entweder ein Verfahren zur Bestimmung einer Phasendifferenz an mindestens einem Punkt eines Interferenzbereichs zwischen einem ersten elektrischen Feld und einem zweiten elektrischen Feld, welche an dem mindestens einen Punkt interferieren oder ein Verfahren zur Bestimmung einer Phase eines elektrischen Feldes in einem Teil eines Interferenzbereichs auf einer Detektionsebene.

Erfindungsgemäss weist das Interferometer einen Detektor in der Detektionsebene auf. Der Detektor ist ortsauflösend. Hierzu ist erfindungsgemäss die Detektionsebene in eine Vielzahl von Pixeln eingeteilt, welche z.B. wie ein Raster angeordnet sein können. Die zur Detektion der Strahlung geeignete Technologie hängt von der betrachteten Strahlung ab. Im optischen Bereich kommen hierfür CCD- oder CMOS-Kameras in Frage. Hierbei können auch Kameras mit Lock-In-Funktion verwendet werden. Die Raumauflösung wird bevorzugt abhängig vom Gesichtsfeld und unter Beachtung des Nyquist-Shannon Kriteriums so gewählt, dass die Phasenvariation zwischen zwei Auswertepunkten den Wert von $\pi$ nicht übersteigt. Die maximale Phasenvariation ist gegeben durch den größten Winkel, den zwei Strahlen von interferierenden Strahlenbündeln einschließen können, wobei nur Strahlen zu betrachten sind, die auch tatsächlich zur Interferenz kommen. Dieser Winkel steht im Zusammenhang mit dem Winkelbereich, den ein Interferometer im Objektraum auflösen kann. Dieser aufgelöste Bereich sollte bevorzugt mit dem Gesichtsfeld übereinstimmen, d.h. mit dem Bereich, aus dem Strahlung aus dem Objektraum auf den Detektionsbereich kommen kann. Der Detektionsbereich ist hierbei der Bereich der Detektionsebene, der von dem Detektor erfasst wird. Durch strahlformende optische Elemente im Strahlengang des Interferometers bzw. vor dem Interferometer ist es möglich, eine gegebene, insbesondere technologisch bestimmte, Pixelrasterung des Detektors an das gewünschte Gesichtsfeld anzupassen. Die für ein erfindungsgemäßes Interferometer geeigneten Detektoren müssen daher keine festgelegten Kriterien der Ortsauflösung erfüllen, da es möglich ist, das erfindungsgemäße Interferometer an den Detektor anzupassen. Die hierbei zur Verfügung stehende große Freiheit bei der Systemauswahl, weitgehend unabhängig von Aberration und Herstellungsdefiziten, stellt einen großen Vorteil des Interferometers dar.

Die Auswerteeinheit ist mit dem Detektor verbunden, d.h. die vom Detektor gelieferten Messwerte können von der Auswerteeinheit abgefragt bzw. gelesen werden. In diesem Fall berechnet die Auswerteeinheit die von dem erfindungsgemäßen Verfahren zu bestimmende Phasendifferenz bzw. Phase und stellt diese Informationen bzw. Messwerte z.B. an einer Schnittstelle zur Verfügung, so dass ein Benutzer diese Informationen bzw. Messwerte auslesen kann.

Als Auswerteeinheit werden bevorzugt FPGAs (Field Programmable Gate Arrays) für ultraschnelle Anwendungen verwendet.

Gemäß einer anderen Ausführungsform, welche unabhängig von der Anwesenheit einer Auswerteeinheit ist, können auch Computersysteme mit Grafikprozessor(GPU)-Auswertungsmodulen oder Mikroprozessoren mit einem oder mehreren Kernen verwendet werden. Für die meisten Anwendungen müssen keine besonders hohen Anforderungen an die technische Ausstattung der Auswerteeinheit gestellt werden. Selbst eine Auswertung mit Mikro-Computern, wie z.B. Raspberry Pi, ist möglich, je nach gewählter Ausführungsoption.

Bevorzugt weist der erste Interferometerarm oder der zweite Interferometerarm zwischen dem Strahlteiler und der Überlappungseinrichtung mindestens ein Strahlumlenkelement auf. Hierbei werden der Strahlteiler und die Überlappungseinrichtung nicht mitgerechnet. Bevorzugt weist jeder der beiden Interferometerarme ein oder zwei Strahlumlenkelemente auf.

Ein Strahlumlenkelement kann definiert sein als ein physikalisches Objekt, an dem ein darauf einfallender Lichtstrahl zumindest teilweise umgelenkt werden kann. Ein Strahlumlenkelement kann z.B. durch einen Spiegel oder ein diffraktives optisches Element (DOE) realisiert sein. Ferner ist auch ein Strahlteilerwürfel ein Strahlumlenkelement.

Nach einer weiteren Weiterbildung weist mindestens ein Strahlumlenkelement ein diffraktives optisches Element (DOE), insbesondere ein Gitter, auf. Ein DOE kann durch ein sehr leichtes Bauteil realisiert werden.

Bevorzugt ist für den ersten bzw. zweiten Zentralstrahl die Länge vom Strahlteiler bis zum zentralen Bildpunkt auf der Detektionsebene gleich lang. Ein Maß für diese Länge ist der optische Pfad entlang der beschriebenen Wege. Ein Vorteil dieser gleichen Pfadlänge ist, dass die Kohärenzlänge des verwendeten Lichtes geringer sein kann.

Ein weiterer Vorteil liegt in einer vereinfachten Auswertung der Interferogramme, da diese keine oder geringere Beugungsterme enthalten. Der Grund hierfür ist, dass sich Beugungseffekte bei der Vor- und Zurückpropagation kompensieren können, so dass hierbei in geeigneten Fällen nur die Differenz der Weglängen wirksam wird.

Bevorzugt sind der Strahlteiler, der erste Interferometerarm, der zweite Interferometerarm, die Überlappungseinrichtung und die Detektionsebene so einrichtbar bzw. justierbar, bevorzugt so eingerichtet, dass die Strahlumlenkungen für einen fünften Lichtstrahl, welcher vor dem Strahlteiler der Zentralstrahl und nach dem Strahlteiler der erste Zentralstrahl ist, wobei der fünfte Lichtstrahl nur zwischen einem Punkt unmittelbar vor dem Strahlteiler und unmittelbar nach der Überlappungseinrichtung betrachtet wird, und für einen sechsten Lichtstrahl, welcher vor dem Strahlteiler der Zentralstrahl und nach dem Strahlteiler der zweite Zentralstrahl ist, wobei der sechste Lichtstrahl nur zwischen einem Punkt unmittelbar vor dem Strahlteiler und unmittelbar nach der Überlappungseinrichtung betrachtet wird, in der Summe gleich 5, 6 oder 7 ist.

Hierbei ist zu beachten, dass die Anzahl der Strahlumlenkungen gemeint ist, welche beide Zentralstrahlen innerhalb des Interferometers in Summe erfahren. Hierbei werden der Strahlteiler und die Überlappungseinrichtung mitgerechnet. Wird im Strahlteiler bzw. in der Überlappungseinrichtung nur ein einziger Strahl umgelenkt, während der andere Strahl nicht abgelenkt wird, so wird für das jeweilige Element eine Strahlumlenkung gezählt. Wenn beim Strahlteiler sowohl zwischen dem auf den Strahlteiler fallenden Lichtstrahl und dem Lichtstrahl im ersten Interferometerarm direkt nach dem Strahlteiler als auch zwischen dem auf den Strahlteiler fallenden Lichtstrahl und dem Lichtstrahl im zweiten Interferometerarm direkt nach dem Strahlteiler eine Umlenkung erfolgt, so werden für den Strahlteiler zwei Strahlumlenkungen gezählt. Wenn bei der Überlappungseinrichtung für beide auf die Überlappungseinrichtung fallende Lichtstrahlen eine Strahlumlenkung erfolgt, so werden für die Überlappungseinrichtung zwei Strahlumlenkungen gezählt.

Für ein Interferometer mit gleichen Armlängen kann man theoretisch beweisen, dass für eine Anzahl an Strahlumlenkungen gleich vier die erste Bedingung, wonach es einen Zentralstrahl gibt, welcher an dem Strahlteiler in den ersten und zweiten Zentralstrahl aufgespalten wird, wobei der erste und zwei Zentralstrahl auf der Detektionsebene in dem Interferenzbereich überlappen, von unendlich vielen Lichtstrahlen erfüllt wird. Da dies im Widerspruch zum Anspruch 1 ist, in dem gefordert wird, dass es (bei gegebenem Objektpunkt) genau einen solchen Zentralstrahl gibt, wurde bewiesen, dass ein Interferometer mit gleichen Armlängen und vier Strahlumlenkungen den Anspruch 1 nicht erfüllen kann. Ferner wurde für dasselbe Interferometer bewiesen, dass es für einen Lichtstrahl, welcher von dem Objektpunkt des Objektes ausgeht und Teil des Strahlenbündels ist, jedoch nicht der Zentralstrahl ist, einen ersten den ersten Interferometerarm durchlaufenden Lichtstrahl und einen zweiten den zweiten Interferometerarm durchlaufenden Lichtstrahl gibt, welche an dem Strahlteiler aus dem Lichtstrahl aufgespalten werden und welche die Detektionsebene an demselben Punkt treffen. Somit wurde von diesen Interferometer auch bewiesen, dass die zweite Bedingung des Hauptanspruchs nicht erfüllt ist.

Ferner wurde für ein Interferometer mit sechs Strahlumlenkungen theoretisch und experimentell nachgewiesen, dass die Merkmale des Anspruchs 1 realisierbar sind. Messungen an einem bereits realisierten Prototyp können auf Verlangen geliefert werden.

Hierbei steht die Armlänge für die Länge, die der erste bzw. zweite Zentralstrahl vom Strahlteiler bis zum zentralen Bildpunkt auf der Detektionsebene zurücklegt. Somit bedeutet gleiche Armlänge, dass die Länge für den ersten und zweiten Zentralstrahl gleich ist.

Bevorzugt sind eine erste Ebene oder Einfallsebene, welche gegeben ist durch den ersten Zentralstrahl und den zweiten Zentralstrahl direkt nach dem Strahlteiler und eine zweite Ebene oder Ausfallsebene, welche gegeben ist durch den ersten Zentralstrahl und den zweiten Zentralstrahl direkt vor der Überlappungseinrichtung, ungleich.

Bevorzugt ist ein Abstand zwischen der ersten Ebene und der zweiten Ebene größer als das 0,01-fache, bevorzugt das 0,1-fache, und weiter bevorzugt das 1-fache des Durchmessers der Apertur des Strahlteilers. Diese Definition gilt für parallele Ebenen.

Für nicht parallele Ebenen ist der Winkel zwischen der ersten Ebene und der zweiten Ebene bevorzugt größer als 5°, bevorzugter größer als 10°, noch weiter bevorzugt größer als 20° und am bevorzugtesten größer als 45°.

Bevorzugt weist das Interferometer eine monolithische Optik bzw. Aufbau auf, welche den Strahlteiler, die Überlappungseinrichtung sowie sämtliche Strahlumlenkelemente im ersten und zweiten Interferometerarm aufweist. Hierbei erfolgen alle Strahlumlenkungen an der monolithischen Optik, bevorzugt an der Innenseite der monolithischen Optik.

Bevorzugt weist entweder der erste Interferometerarm und/oder der zweite Interferometerarm eine Vorrichtung zur Veränderung eines optischen Pfades des entsprechenden Interferometerarms auf. Zur Durchführung des Verfahrens zur Bestimmung einer Phasendifferenz an mindestens einem Punkt des Interferenzbereichs des dreidimensionalen Interferometers, ist es notwendig, in einem Interferometerarm den optischen Pfad zu verändern. Hierbei ist es bevorzugt, dass die Änderung des optischen Weges kleiner oder gleich einer Phasenänderung von $2\pi$ ist. Für Details zum Verfahren wird auf die nachstehende Beschreibung des Verfahrens verwiesen.

Hierbei kann die Veränderung des optischen Pfades erzielt werden durch Verschiebung von mindesten einem optischen Element. Falls es hierbei zu einer Veränderung der Ausbreitungsrichtung kommt, kann man zwischen mehreren Vorgehensweisen wählen. Erstens kann der Effekt auf die Ausbreitungsrichtung so gering sein, dass er vernachlässigbar ist. Zweitens kann der Effekt bei der Auswertung berücksichtigt werden. Drittens kann die Veränderung der Ausbreitungsrichtung bei Erhalt der Veränderung des optischen Pfades kompensiert werden.

Gemäß einer weiteren Ausführungsform weist das Interferometer bevorzugt ferner eine Vorrichtung zum relativen Verschieben, relativen Strecken, relativen Verkippen und/oder relativen Rotieren eines auf der Detektionsebene vorhandenen, ersten Lichtfeldes, welches vom ersten Strahlenbündel herrührt, und eines auf der Detektionsebene vorhandenen, zweiten Lichtfeldes, welches vom zweiten Strahlenbündel herrührt, auf.

Die Vorrichtung wird somit dazu benutzt, beispielsweise das erste elektrische Feld auf der Detektionsebene gegenüber dem zweiten elektrischen Feld auf der Detektionsebene so zu verändern oder transformieren, so dass das transformierte erste elektrische Feld gegenüber dem ursprünglichen ersten elektrischen Feld durch eine projektive Abbildung beschrieben werden kann. Bevorzugt ist die projektive Abbildung eine affine Abbildung. Eine beliebige projektive Abbildung setzt sich zusammen aus einer Abfolge von Verschiebungen, Streckungen, insbesondere Punktstreckungen, Verkippungen einer Ebene im Raum sowie Rotationen. Hierbei kann die Reihenfolge auch geändert werden.

Die Vorrichtung zum relativen Verschieben, relativen Verkippen und/oder relativen Rotieren kann realisiert werden durch eine örtliche Verschiebung oder Verkippung eines optischen Elements, zum Beispiel eines Strahlumlenkelements, im Strahlengang, z.B. in einem der Interferometerarme.

Eine relative Verschiebung des ersten elektrischen Feldes auf der Detektionsebene relativ zum zweiten elektrischen Feld auf der Detektionsebene wird auch als "lateral shear" bezeichnet. Für das vorliegende Interferometer, welches einen ortsauflösenden Detektor mit Pixeln aufweist, ist ein "lateral shear" von mindestens einem Pixel erforderlich, bevorzugt ist der "lateral shear" zwischen 1 bis 10 Pixeln. Bei einer relativen Rotation des ersten zum zweiten elektrischen Feldes wird auch von "rotational shear" gesprochen.

Durch die unterschiedliche relative Lage wird ein unabhängiger Datensatz für einen Interferenzterm IF erzeugt und der Rang der Bestimmungsgleichung für die Phase erhöht.

Durch Aufnahme eines Interferogramms mit einem transformierten ersten oder zweiten elektrischen Feld, wobei das jeweils andere elektrische Feld unverändert geblieben ist, liefert für jeden Pixel des Detektors in der Detektionsebene ein Interferenzsignal zwischen dem ersten und zweiten elektrischen Feld, wodurch mehr Informationen über die Interferenz zwischen den beiden elektrischen Feldern erhalten wird. Dadurch erzielt man eine Erhöhung des Rangs der quadratischen Matrixgleichung

$$E_1\left(x_{i,j}\right) * \overline{E_2\left(x_{i,j}\right)} = e^{i\psi_{i,j}}\left|E_1\left(x_{i,j}\right)\right|\left|E_2\left(x_{i,j}\right)\right| = IF_{i,j} \qquad (4),$$

welche im Zusammenhang mit dem Verfahren zur Bestimmung einer Phase eines elektrischen Feldes in einem Teil des Interferenzbereichs des dreidimensionalen Interferometers untenstehend näher erläutert wird.

Hierbei bezeichnet E1 das erste elektrische Feld auf der Detektionsebene, welches von dem ersten Strahlenbündel herrührt, E2 das erste elektrische Feld auf der Detektionsebene, welches von dem ersten Strahlenbündel herrührt, $\Psi$ die Phasendifferenz zwischen E1 und E2 und IF den Interferenzterm zwischen den Feldern E1 und E2. Es soll keinen Unterschied machen, ob das elektrische Feld mit E1 oder $E_1$ bezeichnet wird. In Gleichung (4) wurde für den Ort x eine Pixelrasterung vorgenommen, die die Indizes i und j aufweist. Details zur Gleichung (4) werden im Zusammenhang mit dem erfindungsgemäßen Verfahren untenstehend beschrieben.

Aus praktischen Gründen sind in der vorliegenden Anmeldung häufig physikalische Größen mit Indizes notiert ist. Hierbei versteht der Fachmann jedoch, dass auch eine entsprechende nicht indizierte physikalische Größe verwendet werden kann. Eine entsprechende Formulierung der entsprechenden Gleichung kann hergeleitet werden.

Als Rang eines Gleichungssystems wird die Anzahl unabhängiger Bestimmungsgleichungen verstanden. Hat man eine geringere Anzahl an Bestimmungsgleichungen als Variablen, so ist das Gleichungssystem unterbestimmt, d.h. der Rang ist geringer als die Anzahl unabhängiger Variablen. Ist die Anzahl unabhängiger Gleichungen größer als die Anzahl der Variablen, so ist das Gleichungssystem überbestimmt. Das Gleichungssystem wird dann so gelöst, dass man die Gleichungen nur näherungsweise erfüllt, aber hierbei die Abweichung, z.B. die quadratische Abweichung, minimiert. Ist die Anzahl unabhängiger Gleichungen genau gleich groß wie die Anzahl der Variablen, d.h. wenn Ranggleichheit vorliegt, dann gibt es genau eine exakte Lösung des Gleichungssystems.

Für das erfindungsgemäße Interferometer wird beim Gleichungssystem der Gleichung (4) und daraus abgeleiteten Gleichungssystemen Ranggleichheit oder Überbestimmtheit bevorzugt. Überbestimmte Gleichungssysteme können besonders robust gegen Messfehler und Rauschen sein.

Das erfindungsgemäße Interferometer wird bevorzugt als holographische Kamera verwendet. Bei dieser Verwendung wird die Amplitude und Phase eines von einem realen Objekt stammenden Strahlungsfeldes gemessen. Dies steht im Gegensatz zu einer herkömmlichen Kamera, die nur die Amplitude bzw. äquivalent die Intensität misst.

Der Strahlengang kann in beiden Fällen gleich gewählt sein, d.h. die Lichtquelle beleuchtet das Objekt und das reflektierte Licht durchläuft eine Auffangoptik und fällt auf die Kamera, wo ein reales Bild erzeugt werden kann.

Bei einer herkömmlichen Kamera ist es notwendig, dass durch sogenannte Fokussierung ein reales Bild erzeugt wird, bei der holgraphischen Kamera ist auch rechnerisch eine Nachfokussierung möglich.

Durch die Abbildung wird mit der holographischen Kamera die Phasenlage jedes streuenden Objektpunktes gemessen, d.h. bis auf ein Vielfaches einer Wellenlänge die räumliche Lage. Auch transparente dielektrische Schichten ändern das aufgenommene Bild, so wie das aus der Phasenkontrastmikroskopie bekannt ist. Während die Phasenkontrastmikroskopie nur einen Kontrast in der Phase erzeugt, misst die holographische Kamera die Phase als numerischen Wert.

Die holographische Kamera kann somit an bestehenden optischen Systemen eingesetzt werden, um zusätzliche Bildinformationen zu erhalten.

Das offenbarte Interferometer kann sowohl für sichtbares Licht, aber in geeigneter Ausführung auch für Röntgenstrahlen, Ultraviolett, Infrarot und fernes Infrarot eingesetzt werden.

Beim Design sind bei Spiegeln und Gittern die entsprechenden Technologien einzusetzen. Auf die Verwendung von transparenten Medien kann verzichtet werden.

Auch eine Verwendung mit anderen Wellen ist möglich, z.B. Elektronen-Wellen in einem Elektronen-Mikroskop und auch Neutronen-Wellen. Von Vorteil ist, dass die Kohärenzanforderungen des Interferometers gering sind. Die Pfaddifferenzen müssen geringer als die Kohärenzlänge sein. Es kann auch bei Pfadgleichheit gearbeitet werden.

Im Folgenden werden das Verfahren zur Bestimmung einer Phasendifferenz an mindestens einem Punkt des Interferenzbereichs des dreidimensionalen Interferometers sowie das Verfahren zur Bestimmung einer Phase eines elektrischen Feldes in einem Teil des Interferenzbereichs des dreidimensionalen Interferometers dargelegt. Diese beiden Verfahren ermöglichen es erst, mit dem Interferometer ein von einem Objekt erzeugtes Lichtfeld zu vermessen. Insofern sind diese beiden Verfahren äußerst wichtig, um das erfindungsgemäße Interferometer bestimmungsgemäß benutzen zu können.

Hierbei ergibt sich bei der Beschreibung der Verfahren ein Unterschied zu der Beschreibung des Interferometers. Bei der Beschreibung des Interferometers wurde zum einen die geometrische Näherung benutzt. Ferner wurde bei der Beschreibung des Interferometers lediglich ein klein gewähltes Strahlenbündel betrachtet, welches von einem frei gewählten Referenzpunkt auf dem Objekt ausging. Bei der Beschreibung der Verfahren wird diese vereinfachte Betrachtungsweise fallen gelassen und man geht von einem beliebigen Strahlungsfeld aus. Dies ist angebracht, da in Realität das erfindungsgemäße Verfahren auch auf diese Weise durchgeführt werden.

Der Begriff des Strahlenbündels ist in Verbindung mit dem erfindungsgemäßen Verfahren ebenfalls breiter, da hier das Objekt eine Vielzahl von Objektpunkten aufweist. Von jedem Objektpunkt geht ein Strahlenbündel aus. Hierbei wird ein Strahlenbündel so definiert, dass alle von einem Objektpunkt ausgehenden Strahlen das Strahlenbündel darstellen. Somit wird durch das Interferometer eine Überlagerung einer Vielzahl von Strahlenbündel durch die Interferometerarme propagiert, welche auf der Detektionsebene in dem Interferenzbereich zur Interferenz gebracht werden.

Hierzu wird zuerst die sogenannte Fundamentalgleichung des Interferometers hergeleitet.

Wie bereits oben dargelegt, interferieren das erste elektrische Feld, welches von dem ersten Strahlenbündel herrührt, und das zweite elektrische Feld, welches von dem zweiten Strahlenbündel herrührt, im Interferenzbereich auf der Detektionsebene. Demnach ist im Interferenzbereich auf der Detektionsebene die gemessene Intensität das Betragsquadrat einer Superposition des ersten und zweiten elektrischen Feldes. Dies kann wie folgt geschrieben werden:

$$I_g = \left| E_1\left(x_{i,j}\right) + E_2\left(x_{i,j}\right) \right|^2 \qquad (5),$$

wobei $E_1(x_{i,j})$ das erste elektrische Feld am Ort $x_{i,j}$ und wobei $E_2(x_{ij})$ *das* zweite elektrische Feld am Ort $x_{i,j}$ ist. Hierbei wurde für den Ort $x_{i,j}$ eine Pixelrasterung mit den Indizes i und j vorgenommen, wobei die beiden Indizes für zwei orthogonale Raumrichtungen auf der Detektionsebene bzw. dem Interferenzbereich stehen.

Formel (5) lässt sich berechnen zu:

$$I_g = \left| E_1\left(x_{i,j}\right) \right|^2 + \left| E_2\left(x_{i,j}\right) \right|^2 + E_1\left(x_{i,j}\right) \cdot \overline{E_2\left(x_{i,j}\right)} + \overline{E_1\left(x_{i,j}\right)} \cdot E_2\left(x_{i,j}\right) \quad (6),$$

wobei

$$E_1\left(x_{i,j}\right) * \overline{E_2\left(x_{i,j}\right)} = e^{i\psi_{i,j}} \left| E_1\left(x_{i,j}\right) \right| \left| E_2\left(x_{i,j}\right) \right| = IF\left(x_{i,j}\right) = IF_{i,j} \qquad (7)$$

die Gleichung für den Interferenzterm IF ist. Hierbei ist $\overline{E_2(x_{i,j})}$ das komplex konjugierte zweite elektrische Feld.

Zur Vereinfachung werden folgende Abkürzungen verwendet:

$$E_1\left(x_{i,j}\right) = E1_{ij} \qquad (8)$$

$$E_2\left(x_{i,j}\right) = E2_{ij} \qquad (9)$$

$$IF\left(x_{i,j}\right) = IF_{ij} \qquad (10)$$

Unter Anwendung des Rayleigh-Sommerfeld-Beugungsintegrals lässt sich eine Beziehung zwischen dem ersten und zweiten elektrischen Feld auf der Detektionsebene exakt herleiten. Hierbei wird eine exakte Kenntnis des Interferometers vorausgesetzt, inklusive aller Aperturen, Umlenkungen und Entfernungen. Man setzt voraus, dass man das erste elektrische Feld auf der Detektionsebene kennt. Unter Verwendung des Rayleigh-Sommerfeld-Beugungsintegrals kann man exakt berechnen, wie die Feldverteilung des ersten elektrischen Felds im ersten Interferometerarm war, bevor das erste elektrische Feld auf die Detektionsebene getroffen ist. Somit kann man auch zurückrechnen, wie die Feldverteilung des ersten elektrischen Felds im oder auf dem Strahlteiler war. Von dort kann man dieses rückwärts berechnete elektrische Feld wieder vorwärts weiter entlang dem zweiten Interferometerarm bis zur Detektionsebene propagieren bzw. berechnen. Somit kann man, falls entweder das erste oder zweite elektrische Feld auf der Detektionsebene gegeben ist, eindeutig das jeweils andere elektrische Feld berechnen. Somit liegt eine bijektive Abbildung zwischen den beiden elektrischen Feldern vor, welche als Matrix U ausgedrückt werden kann. Die Matrix U wird hierbei auch als Propagationsmatrix bezeichnet. Der Zusammenhang zwischen dem ersten und zweiten elektrischen Feld kann wie folgt ausgedrückt werden:

$$E2_{mn} = \sum_{i,j} U_{mn,ij} \cdot E1_{ij} \qquad (11)$$

Hierbei beschreibt die Pixelrasterung (m, n) mit den Indizes m und n bevorzugt dieselbe Pixelrasterung (i, j) mit den Indizes i und j für die Detektionsebene, wie bereits vorstehend erläutert. Hierbei werden die elektrischen Felder als Vektoren aufgefasst, bei denen sämtliche Indizes gemäß einer bestimmten Reihenfolge durchnummeriert sind. Hierbei ist die Reihenfolge nicht entscheidend. Beispielsweise können die Einträge des Vektors zuerst alle Pixel der ersten Reihe und danach alle Pixel der zweiten Reihe usw. bis man bei der letzten Reihe angekommen ist, aufweisen. Somit können die Indizes i und j des ersten elektrischen Feldes $E1_{ij}$ als ein einziger Index eines Vektors aufgefasst werden, welcher aufgrund der zweidimensionalen Pixelrasterung zwei Indizes aufweist. Dementsprechend ist $U_{mn,ij}$ eine gewöhnliche Matrix, wobei die Zeilen mit den beiden Indizes m und n und die Spalten mit den beiden Indizes i und j bezeichnet werden. Für jedes erfindungsgemäße Interferometer muss man die Matrix U einzeln berechnen bzw. bestimmen.

Die Matrix bzw. Abbildung U weist bei geeigneter Wahl alle geometrischen und alle Beugungseffekte auf. U ist im Allgemeinen eine näherungsweise unitäre Matrix. Für eine unitäre Matrix gilt, dass die adjungierte Matrix oder hermitesch transponierte Matrix der Matrix U gleich der zur Matrix U inversen Matrix $U^{-1}$ ist. Dass U im Allgemeinen lediglich eine näherungsweise unitäre Matrix ist, hat seine Ursache darin, dass bei der exakten Propagation des elektrischen Feldes auch Feldanteile den indizierten Betrachtungsbereich verlassen können, diese Feldanteile also abgeschnitten werden und verloren gehen. Dies wird beeinflusst durch eine geeignete Wahl des Berechnungsbereiches, die Feinheit der Indizierung.

Falls man $E2_{ij}$ in der Formel (7) ersetzt durch den Ausdruck aus Formel (11), so ergibt sich:

$$IF_{i,j} = E_1\left(x_{i,j}\right) * \overline{E_2\left(x_{i,j}\right)} = E_1\left(x_{i,j}\right) \cdot \overline{\sum_{m,n} U_{ij,mn} \cdot E1_{mn}} = E1_{ij} \cdot \sum_{m,n} \overline{U_{ij,mn}} \cdot \overline{E1_{mn}} \qquad (12)$$

Falls man den Interferenzterm IF inklusive der Phase, d.h. als komplexe Größe gemessen hat, ist diese Gleichung eine quadratische Gleichung in den Feldern $E1_{ij}$. Wenn man bei einem Interferometer davon ausgeht, dass die Indizes i, j, m und n z.B. jeweils von 1 bis 1000 laufen, so ist diese quadratische Gleichung sehr schwer zu lösen. Bei Multiplikation der Gleichung (12) mit dem komplex konjugierten ersten elektrischen Feld $E1_{ij}$, ergibt sich eine Gleichung, die bei Kenntnis des Betrages des ersten elektrischen Feld $E1_{ij}$ sehr viel einfacher zu lösen ist, nämlich die Fundamentalgleichung des Interferometers:

$$IF_{ij} \cdot \overline{E1_{ij}} = \left|E1_{ij}\right|^2 \cdot \sum_{m,n} \overline{U_{ij,mn}} \cdot \overline{E1_{mn}} \qquad (13)$$

Das Verfahren zur Bestimmung einer Phasendifferenz an mindestens einem Punkt eines Interferenzbereichs des dreidimensionalen Interferometers sowie das Verfahren zur Bestimmung einer Phase eines elektrischen Feldes in einem Teil des Interferenzbereichs des dreidimensionalen Interferometers drehen sich beide um diese Fundamentalgleichung. Zur Vereinfachung wird das Verfahren zur Bestimmung einer Phasendifferenz als erstes Verfahren und das Verfahren zur Bestimmung der Phase des elektrischen Feldes als zweites Verfahren bezeichnet.

Gleichung (13) ist bei Kenntnis des Betrages des ersten elektrischen Feld $E1_{ij}$ eine lineare Gleichung für das komplexe, phasenbehaftete $\overline{\text{Feld } E1_{ij}}$, welche relativ einfach lösbar ist. Voraussetzung hierzu ist, dass man den Interferenzterm IF als komplexe Größe gemessen bzw. bestimmt hat, die Propagationsmatrix U berechnet hat und die Beträge des ersten und zweiten elektrischen Felds kennt. Die Lösung der Gleichung (13) liefert dann das erste elektrische Feld als komplexe Größe für zumindest einen Teilbereich des Interferenzbereichs. Das zweite elektrische Feld als komplexe Größe kann dann mithilfe der Gleichung (11) berechnet werden.

Damit ist gezeigt, dass aus den Messdaten des Interferenzterms IF durch Lösung einer linearen homogenen Gleichung aus den Amplituden der elektrischen Felder die jeweiligen Phasen berechnet werden können. Dies kann zum Beispiel durch eine Singulärwertzerlegung (SWZ oder auf Englisch SVD für Singular Value Decomposition) erreicht werden, deren numerischer Aufwand gering ist. Dies ist eine wesentliche Erkenntnis der vorliegenden Erfindung.

Hierbei wird die Phase des Interferenzterms IF durch das erste Verfahren bestimmt. Bei Kenntnis der Absolutbeträge des ersten und zweiten elektrischen Felds, kann man somit den Interferenzterms IF als komplexe Größe bestimmen.

Beim Verfahren mit "spatial carrier" wird je nach verwendeter Methode die Amplitude nicht gemessen, sondern es erfolgt nur eine Analyse der Beugungsstreifen, engl. "Fringe Analysis", d.h. eine Bestimmung der Phase, siehe z.B. Handbook of optical Metrology, 2. Auflage, CRC Press Taylor and Francis Group, Edited by Toru Yoshizawa, Kapitel 8, "Speckle Methods and applications", Nandigana Krishna Mohan, Kapitel 8.5.1, "Fringe Analysis".

Mithilfe des zweiten Verfahrens kann man die Phasen beider elektrischer Felder bestimmen. Beide Verfahren werden nachfolgend dargelegt.

Ferner wird eine Aufgabe der Erfindung durch ein Verfahren zur Bestimmung einer Phasendifferenz $\Psi_{ij}$ an mindestens einem Bildpunkt eines Interferenzbereichs zwischen einem ersten elektrischen Feld und einem zweiten elektrischen Feld, welche an dem mindestens einen Bildpunkt interferieren, wobei das erste elektrische Feld von einem ersten Interferenzarm herrührt und das zweite elektrische Feld von einem zweiten Interferenzarm herrührt, gelöst.

Das Verfahren zur Bestimmung einer Phasendifferenz ist ein erster Schritt, welcher Voraussetzung ist für den zweiten Schritt, nämlich das Verfahren zur Bestimmung einer Phase eines elektrischen Feldes in einem Teil des Interferenzbereichs des dreidimensionalen Interferometers, welches ausgehend von dem ersten Schritt, also dem Verfahren zur Bestimmung einer Phasendifferenz, eine Phase eines elektrischen Feldes in einem Teil des Interferenzbereichs gemäß der Fundamentalgleichung (13) bestimmt.

Bei der Durchführung des Verfahrens zur Bestimmung einer Phasendifferenz wird bevorzugt ein erfindungsgemäßes Interferometer benutzt.

Der Bildpunkt ist bevorzugt ein Punkt oder ein Pixel einer Pixelrasterung (i, j) der Detektionsfläche des Interferometers.

Die Phase $\Psi_{ij}$ ist eine Phasendifferenz, gegeben als Differenz zwischen der Phase des ersten elektrischen Feldes $\Phi 1_{ij}$ und der Phase des zweiten elektrischen Feldes $\Phi 2_{ij}$ und kann somit ausgedrückt werden als:

$$\Psi_{ij} = \Phi 1_{ij} - \Phi 2_{ij} \qquad (14)$$

Einerseits ist $\Psi_{ij}$ eine Phasendifferenz zwischen den Phasen der interferierenden elektrischen Felder, andererseits jedoch auch eine Phase des Interferenzterms $IF_{i,j}$. Eine Phasenmessung ist jedoch in der Regel nur bis auf eine additive Konstante möglich.

Deshalb ist es zur Bestimmung der Phase $\Psi_{ij}$ ohne Einschränkung der Allgemeinheit möglich, zu $\Psi_{ij}$ eine Konstante $\alpha$ zu addieren.

Somit lässt sich Gleichung (6) schreiben als:

$$I_g = \left|E1_{ij}\right|^2 + \left|E2_{ij}\right|^2 + IF_{ij} + \overline{IF_{ij}} = \left|E1_{ij}\right|^2 + \left|E2_{ij}\right|^2 + 2 \cdot \Re\left(IF_{ij}\right) =$$
$$= \left|E1_{ij}\right|^2 + \left|E2_{ij}\right|^2 + 2 \cdot \left|E1_{ij}\right|\left|E2_{ij}\right| \cdot \cos\left(\Psi_{i,j} + \alpha\right) \qquad (15)$$

Für ein einzelnen Pixel mit gegebenem Indizes i und j, kann diese Gleichung für ein gegebenes $\alpha$ nicht eindeutig gelöst werden, da die Kosinusfunktion nicht eindeutig ist, weil sie jeden Funktionswert zwischen -1 bis 1 an zwei unterschiedlichen Stellen annimmt. Aufgrund dieser Uneindeutigkeit benötigt man eine Zusatzinformation.

Es gibt prinzipiell zwei Möglichkeiten, diese Uneindeutigkeit aufzulösen. Diese zwei im Stand der Technik bekannten Verfahren heißen "temporal phase shifting" und "spatial phase shifting", siehe z.B. Handbook of optical Metrology, 2. Auflage, CRC Press Taylor and Francis Group, Edited by Toru Yoshizawa, Kapitel 8, "Speckle Methods and applications", Nandigana Krishna Mohan, Kapitel 8.5.1, "Fringe Analysis". Für "temporal phase shifting" wird z.T. der Ausdruck "Phase-shifting" verwendet. Für "spatial phase shifting" wird z.T. der Ausdruck "Carrier-Phase" verwendet. Bei der Durchführung des Verfahrens zur Bestimmung einer Phasendifferenz, des sogenannten ersten Verfahrens, wird erfindungsgemäß das Phase-Shifting-Verfahren oder das Spatial-Carrier- Verfahren angewendet. Bevorzugt werden das Phase-Shifting-Verfahren und das Spatial-Carrier- Verfahren kombiniert angewendet. Dies hat den Vorteil, dass hierdurch eine weitere Erhöhung der Genauigkeit erzielt werden kann.

Beim Phase-Shifting-Verfahren wird die Phase, d.h. die Phasendifferenz $\Psi$, variiert, um die gemessene Funktion, d.h. die Gesamtintensität $I_g$ für unterschiedliche Werte der Kosinusfunktion zu vermessen. Die Phasendifferenz $\Psi$ kann variiert werden, indem das Interferometer mit einer Vorrichtung zur Veränderung der relativen Pfadlänge versehen ist. Dies kann realisiert werden, indem der erste Interferometerarm und/oder der zweite Interferometerarm eine Vorrichtung zur Veränderung eines optischen Pfades des entsprechenden Interferometerarms aufweist. Bevorzugt weist lediglich ein Interferometerarm die Vorrichtung zur Veränderung des optischen Pfades auf. Bei einer Veränderung des optischen Pfades um eine Wellenlänge ergibt sich eine relative Phasenänderung von $2\pi$. Die in Gleichung (15) verwendete Phase $\Psi_{ij}$ verändert sich demnach gemäß folgender Ersetzung:

$$\Psi_{i,j} \rightarrow \Psi_{i,j} + 2\pi \frac{\Delta s}{\lambda} \qquad (16),$$

wobei $\Delta s$ die Veränderung des optischen Pfades und $\lambda$ die verwendete Wellenlänge ist.

Beim Carrier-Phase-Verfahren ist das erfindungsgemäße Interferometer so eingerichtet, dass die Phasendifferenz $\Psi$ in eine ausgewählte Richtung eine monotone Funktion des Ortes x ist. Dies kann man erreichen, indem man die Überlappung der Lichtstrahlen im Interferenzbereich unter einem Mindestwinkel einstellt, d.h. indem man durch einen Winkel zwischen den Zentralstrahlen der Phasendifferenz eine zusätzliche Phase aufprägt. Daher wird die Methode auch Carrier-Phase-Methode genannt.

Mit beiden Verfahren ist es möglich die Phase $\Psi_{i,j}$ bis auf eine additive Konstante zu bestimmen. Ferner ist es auch möglich, die additive Konstante bis auf eine Differenz von $2\pi$ zu bestimmen.

Bevorzugt wird das erste Verfahren für mindestens zwei Punkte des Interferenzbereichs ausgewertet. Bevorzugt wird das erste Verfahren für einen Teil des Interferenzbereichs, insbesondere den ganzen Interferenzbereich, ausgewertet.

Für den Fall, dass die Detektionsebene des Interferenzbereichs in Pixel aufgeteilt ist, wird das erste Verfahren bevorzugt für zwei Pixel, weiter bevorzugt für einen Teil aller Pixel und besonders bevorzugt für alle Pixel durchgeführt.

Bevorzugt werden beim ersten Verfahren mehrere Messungen durchgeführt.

Abschließend wird auf die voranstehend aufgeführte Phasenkonstante $\alpha$ eingegangen. Die Phase $\alpha$ ist ein Phasenfaktor der gemäß Definition für alle Pixel des Betrachtungsgebietes gleich ist. Bezogen auf das gesamte Betrachtungsgebiet kann der Phasenfaktor $\alpha$ bis auf Vielfache von $2\pi$ eindeutig bestimmt werden. Hierzu muss insbesondere bei den Verfahren mit Phase-Shifting, bei denen die optische Pfadlänge zwischen dem ersten und zweiten Interferometerarm verändert wird, eine Position der Pfadlänge als die Referenzposition ausgewählt werden, auf die sich nachfolgend alle Phaseninformationen beziehen. Für diese Position ist $\alpha$ eindeutig bestimmt, indem man das berechnete Interferogramm für die Referenzposition gemäß Formel (15) mit dem Messergebnis vergleicht und $\alpha$ so bestimmt, dass die Übereinstimmung optimal ist, insbesondere dass die Knotenlinien übereinstimmen.

Es wird darauf hingewiesen, dass für diese Referenzposition die Propagationsmatrix U berechnet werden muss, d.h. dass sowohl der Interferenzterm IF als auch die Propagationsmatrix U für dieselbe Pfadlängendifferenz berechnet werden müssen. Die Bedeutung dieser Übereinstimmung der Bezugspunkte kann unter anderem daran erkannt werden, dass die Gleichung (13) im zweiten Verfahren nur dann invariant unter Veränderungen des $\alpha$-Wertes, bzw. der Phase des Interferenzterm IF ist, wenn gleichzeitig auch die Propagationsmatrix U in der Phase geschoben wird.

Bei Bestimmung des $\alpha$-Wertes und der genauen relativen Phasenlage der Armlängen kann insbesondere der zentrale Bildpunkt verwendet werden. Die am zentralen Bildpunkt gemessene Phasendifferenz ist unabhängig von der Phasenlage des einfallenden Lichtfeldes und ausschließlich Ergebnis der unterschiedlichen Pfadlängen der Arme. Der zentrale Bildpunkt ist somit für eine Kalibrierung der Vorrichtung geeignet.

Bei der Verwendung des Interferenzterms IF in der Fundamentalgleichung wird nachfolgend immer angenommen, dass der Interferenzterm IF und die Propagationsmatrix U sich auf die gleiche Armlängen-Konfiguration beziehen und dass die Festlegung von $\alpha$ bei dem Interferenzterm IF eindeutig erfolgt ist.

Ferner wird eine Aufgabe der Erfindung durch ein Verfahren zur Bestimmung einer Phase eines elektrischen Feldes in einem Teil eines Interferenzbereichs auf einer Detektionsebene eines dreidimensionalen Interferometers gelöst. Hierbei ist das Verfahren bevorzugt geeignet, eine Phase eines elektrischen Feldes in einem Teil des Interferenzbereichs der Detektionsebene des vorstehend beschriebenen dreidimensionalen Interferometers zu bestimmen. Dieses erfindungsgemäße Verfahren wird kurz auch als das zweite Verfahren bezeichnet. Das nachstehend beschriebene zweite Verfahren weist vier Schritte auf.

Im ersten Schritt werden für einen Teil des Interferenzbereichs die Intensitäten oder Beträge des ersten und zweiten elektrischen Feldes bestimmt. Dies bedeutet, dass man für jeden Punkt eines Teilbereichs des Interferenzbereichs den Betrag des ersten elektrischen Feldes und den Betrag des zweiten elektrischen Feldes bestimmt. Da die Intensität des elektrischen Feldes proportional zum Betragsquadrat des elektrischen Feldes ist, ist die Bestimmung des Betrages des elektrischen Feldes äquivalent zur Bestimmung der Intensität des elektrischen Feldes.

Gemäß dem ersten Schritt wird gefordert, dass man den Betrag des ersten elektrischen Feldes und den Betrag des zweiten elektrischen Feldes bestimmt. Alternativ kann jedoch auch der Betrag des ersten oder zweiten elektrischen Feldes und der Betrag des Interferenzterms IF bestimmt werden. Da der Betrag des Interferenzterms gleich dem Produkt aus dem Betrag des ersten elektrischen Feldes und dem Betrag des zweiten elektrischen Feldes ist, kann aus der Kenntnis des Betrages des Interferenzterms IF und eines der beiden elektrischen Feldern, das andere der beiden elektrischen Felder berechnet werden.

Zur Bestimmung der Beträge des ersten und zweiten elektrischen Felds gibt es mehrere Verfahren bzw. Möglichkeiten.

Gemäß einer ersten Möglichkeit kann die Amplitude des ersten oder zweiten elektrischen Feldes durch eine Intensitätsmessung bestimmt werden, indem man den jeweils anderen Interferometerarm blockiert und die Intensitätsverteilung der Pixel auf der Detektionsebene misst. Da die gemessene Intensität proportional zum Betragsquadrat des gesuchten elektrischen Feldes ist, kann man durch Ziehen der Quadratwurzel den Betrag des gesuchten elektrischen Feldes in relativen Einheiten erhalten. Alternativ kann man den Proportionalitätsfaktor ausrechnen, um somit den korrekten Betrag des gesuchten elektrischen Feldes zu erhalten.

Gemäß einer zweiten Möglichkeit kann man aus der Phase-Shifting-Methode, insbesondere der Methode des "temporal phase shifting" einen vollständigen Fit des Messsignals für verschiedene Phasenlagen erhalten, d.h. man erhält die Gesamtintensität $I_g = |E1_{ij} + E2_{ij}|^2$ und den Betrag des Interferenzsignals IF, d.h. $|E1_{ij}||E2_{ij}|$. Aus diesen beiden Messwerten, die jeweils eine Funktion von zwei Variablen sind, kann man durch Lösen der quadratischen Gleichung $|E1_{ij}|$ und $|E2_{ij}|$ bis auf ein Vertauschen der Indizes 1 und 2 bestimmen.

Hierbei bedeutet der Begriff "ein Teil des Interferenzbereichs" einen Teilbereich des Interferenzbereichs. Der Teilbereich umfasst hierbei eine gewisse Anzahl an Punkten. Der Teilbereich muss im mathematischen Sinne nicht notwendigerweise zusammenhängend sein, was bedeutet, dass er auch nicht zusammenhängend sein kann.

Falls der Interferenzbereich bzw. die Detektionsebene eine Pixelrasterung aufweist, kann das Verfahren auch für einen Teil der Pixel dieser Pixelrasterung durchgeführt werden. Dem Fachmann ist bekannt, wie er kontinuierliche Funktionen auf einer Pixelrasterung auswertet und berechnen kann. Vorliegend sind aufgrund der Einfachheit und größeren Praxisnähe die Gleichungen für den Interferenzbereich mit einer Pixelrasterung angegeben. Das Verfahren soll jedoch auch für kontinuierliche Funktionen beansprucht sein, auch wenn sich dies in den Gleichungen nicht direkt widerspiegelt.

Im zweiten Schritt des zweiten Verfahrens wird für denselben Teil des Interferenzbereichs der Interferenzterm IF gemäß der Gleichung

$$IF_{ij} = \left|E1_{ij}\right| \cdot \left|E2_{ij}\right| \cdot \exp\left(i \cdot \Psi_{ij}\right) \qquad (17) \text{ (siehe Gleichung (7))}$$

bestimmt.

Hierbei ist $\Psi_{ij}$ die Differenz zwischen der Phase $\Phi1_{ij}$ des ersten elektrischen Feldes $E1_{ij}$ und der Phase $\Phi2_{ij}$ des zweiten elektrischen Feldes $E2_{ij}$. Somit gilt: $\Psi_{ij} = \Phi1_{ij} - \Phi2_{ij}$ (siehe Gleichung (14)).

Die Phasendifferenz $\Psi_{ij}$ wird bevorzugt mit Hilfe des ersten Verfahrens bestimmt. Hierbei ist angemerkt, dass die Phasendifferenz $\Psi_{ij}$ auch ohne Kenntnis der Größen der Beträge der elektrischen Felder, d.h. des ersten und des zweiten elektrischen Feldes, bestimmt werden kann.

Mit der Phasendifferenz $\Psi_{ij}$ kann man den Interferenzterm IF als komplexe Größe bestimmen, vgl. Gleichung (17) oder (7).

Im dritten Schritt des zweiten Verfahrens wird insbesondere für oben erwähnten Teil des Interferenzbereichs eine Propagationsmatrix U bestimmt. Die Propagationsmatrix U ist hierbei identisch mit der im Zusammenhang mit der Fundamentalgleichung des Interferometers angesprochenen Matrix U. Die Komponenten der Propagationsmatrix U wurden bereits obenstehend dargelegt und erklärt und werden geschrieben als $U_{mn,ij}$. Ein Element der Propagationsmatrix U, d.h. $U_{mn,ij}$, gibt hierbei an, wie für eine gegebene Pixelrasterung des Interferenzbereichs das erste elektrischen Feld $E1_{ij}$ an einem Pixel mit den Indizes i und j zu dem zweiten elektrischen Feld $E2_{ij}$ an einem Pixel mit den Indizes m und n transformiert wird.

Wie bereits oben dargelegt gilt die Transformationsgleichung:

$$E2_{mn} = \sum_{i,j} U_{mn,ij} \cdot E1_{ij} \qquad (18) \text{ (vgl. Gleichung (11))}.$$

Die Propagationsmatrix U kann bevorzugt mit der Rayleigh-Sommerfeld-Propagationsformel berechnet werden, siehe Max Born und Emil Wolf, Principles of optics, Cambridge Universiy Press, 8. Auflage, 2013, Kapitel 8.11 Rayleigh-Sommerfeld diffraction integrals, insbesondere Kapitel 8.11.2, Formel (14).

Die Rayleigh-Sommerfeld-Propagationsformel wird hierbei wie folgt angewendet. Ein beliebiges, fiktives erstes elektrisches Feld auf der Detektionsebene wird unter Berücksichtigung der Geometrie entlang dem ersten Interferometerarm zurück bis zu dem Strahlteiler propagiert und dann entlang dem zweiten Interferometerarm vorwärts bis in den Interferenzbereich der Detektionsebene propagiert. So kann man spezifisch für den konkreten Aufbau des dreidimensionalen Interferometers eine Propagationsmatrix U berechnen, welche für ein beliebiges erstes elektrisches Feld $E1_{ij}$ gültig ist.

Die dargestellten Formeln beschreiben die elektrischen Felder in der skalaren Näherung, d.h. die Polarisation des elektrischen Feldes wird in den Formeln nicht dargestellt. Dies ist dann korrekt, wenn das Licht unpolarisiert ist, bzw. wenn nur einen Polarisation vorhanden ist und die Polarisation bei der Überlappung gleichgerichtet ist.

Ist dies nicht der Fall, so muss beachtet werden, dass nur Licht gleicher Polarisation interferieren kann. Dies kann herbeigeführt werden durch eine geeignete Drehung der Polarisation in einem der beiden Arme, so dass das erste und zweite elektrische Feld auf dem Detektor die gleiche Polarisation haben. Bevorzugt wird das Interferometer entsprechend ausgestaltet.

Im allgemeinsten Fall von beliebigen Polarisationen müsste man für jede der Polarisationen getrennte Gleichungen aufstellen und bei der Propagation der Felder auch eine Mischung der Polarisationen zulassen. Die Auswertung der Interferenzbilder wird dadurch komplizierter, da es einen weiteren Freiheitsgrad gibt, allerdings ist die Vorgehensweise mit den beschriebenen Methoden möglich.

In dem vierten Schritt des zweiten Verfahrens wird die Fundamentalgleichung des Interferometers

$$\left|E1_{ij}\right|^2 \cdot \sum_{m,n} \overline{U_{ij,mn}} \cdot \overline{E1_{mn}} = IF_{ij} \cdot \overline{E1_{ij}} \quad (19) \text{ (vgl. Gleichung (13))}$$

für den oben erwähnten Teil des Interferenzbereichs nach dem komplexen ersten elektrischen Feld $\overline{E1_{ij}}$ aufgelöst. Hierbei wurde für das komplexe erste elektrische Feld $\overline{E1_{ij}}$ der Singular verwendet. Gleichwohl versteht der Fachmann aber, dass in der Gleichung (19) bzw. (13) die Variablen die einzelnen Komponenten $E1_{ij}$ für jeden Index i und j sind. Insofern kann man hier auch den Plural verwenden, wenn man versteht, dass die gesuchten Größen jeweils das erste elektrische Feld an mehreren Punkten, nämlich an den Pixelpositionen der Detektionsebene, sind.

Durch komplexe Konjugation erhält man das erste elektrische Feld $E1_{ij}$. Bevorzugt kann man durch Anwendung der Transformationsgleichung (18) auch das zweite elektrische Feld $E2_{ij}$ erhalten.

Somit hat man durch das zweite Verfahren für jeden Punkt eines Teils des Interferenzbereichs sowohl die Phase als auch den Betrag sowohl des ersten als auch des zweiten elektrischen Feldes bestimmt.

Die ersten drei Schritte des zweiten Verfahrens können hierbei in einer beliebigen Reihenfolge durchgeführt werden.

Es wurde bereits im Zusammenhang mit dem ersten Verfahren gezeigt, dass die Phasendifferenz $\Psi_{ij}$ auch ohne Kenntnis der Größen der Beträge der elektrischen Felder, d.h. des ersten und des zweiten elektrischen Feldes, bestimmt werden kann. Somit ist auch der erste Schritt des zweiten Verfahrens vom zweiten Schritt des zweiten Verfahrens unabhängig, so dass die Reihenfolge des ersten und zweiten Schritts des zweiten Verfahrens auch vertauscht werden kann. Der dritte Schritt ist lediglich eine theoretische Berechnung, welche von der Geometrie des verwendeten Interferometers abhängt. Somit ist auch der dritte Schritt von den ersten beiden Schritten des zweiten Verfahrens unabhängig.

Im Folgenden werden Feststellungen zur Fundamentalgleichung (19) angestellt.

Bei der Lösung der Gleichung (19) wird die Kenntnis des Betrags des ersten elektrischen Feldes und des komplexen Interferenzterms für jeden Punkt des betrachteten Teils des Interferenzgebietes und die Kenntnis der Propagationsmatrix U vorausgesetzt.

Unter dieser Voraussetzung ist die Gleichung (19) eine lineare Gleichung für die komplexen ersten elektrischen Felder $\overline{E1_{ij}}$. Hier wird der Plural erste elektrische Felder verwendet, da das erste elektrische Feld an jedem Punkt des betrachteten Teils des Interferenzgebietes gemeint ist. Da der rechte Teil der Gleichung (19) ebenfalls eine Funktion der komplexen ersten elektrischen Felder $\overline{E1_{ij}}$ ist, kann die Gleichung (19) in eine homogene Gleichung umgeformt werden. Die homogene Gleichung hat dann die Form, dass eine Matrix multipliziert mit dem Vektor der komplexen ersten elektrischen Felder gleich einen Nullvektor ergibt. Da die Pixelrasterung (i, j) bevorzugt identisch mit der Pixelrasterung (m, n) ist, handelt es sich bei der Matrix dann um eine quadratische Matrix. In diesem Fall liegt also ein homogenes lineares Gleichungssystem vor, dessen Lösung in dem Kern der Matrix besteht.

Der Rang des in Gleichung (19) beschriebenen linearen Gleichungssystems kann erhöht werden, so dass es genau eine Lösung der homogenen Gleichung (13) gibt. Dies kann erreicht werden durch Durchführung weiterer Messungen und gleichzeitiger Auswertung dieser. Der Kern der Gleichung (13) hat somit die Dimension 1, bzw. äquivalent formuliert, es gibt eine Lösung zum Eigenwert 0.

Die mathematische Lösung der Gleichung (19) kann bevorzugt durch eine Singulärwertzerlegung (SWZ oder auf Englisch SVD für Singular Value Decomposition) erreicht werden, deren numerischer Aufwand gering ist. Die gesuchte Lösung zu Gleichung (13) ist der Eigenvektor mit dem kleinsten Singulärwert in der Singulärwertzerlegung. Dieses Verfahren ist robust gegen Rauschen oder sonstige Störungen der Messwerte. Bei Vorhandensein von Rauschen gibt es gegebenenfalls keine Lösung mit exakt dem Eigenwert 0. Die Gleichung (19) kann jedoch auch durch andere Verfahren als eine Singulärwertzerlegung gelöst werden.

Die oben beschriebene Pixelrasterung (i, j) ist bevorzugt identisch mit der Pixelrasterung (m, n). Dies muss jedoch nicht notwendigerweise so sein.

Die Fundamentalgleichung des Interferometers ist obenstehend im Ortsraum, insbesondere für eine Pixelrasterung der Detektionsebene, formuliert. Es ist jedoch äquivalent dazu, wenn man diese Fundamentalgleichung im Fourierraum beschreibt. Dies hat einige Vorteile, zum Beispiel ist die Darstellung der Propagationsmatrix U in diesem Fall sehr einfach, da die Propagationsmatrix U eine Diagonalmatrix ist.

Dazu muss die Propagationsmatrix U auch im Fourierraum berechnet werden, welche als $\hat{U}(k_x, k_y)$ bezeichnet wird und welche die Form hat:

$$\hat{U}\left(k_x, k_y\right) = \exp\left\{i \cdot k_z\left(k_x, k_y\right) \cdot z\right\} \qquad (20),$$

wobei z der Pfadlängenunterschied zwischen den beiden Interferometerarmen und

$$k_z\left(k_x, k_y\right) = \sqrt{\left(\frac{2\pi}{\lambda}\right)^2 - k_x^2 - k_y^2}$$

ist.

Ferner kann die Fundamentalgleichung auch in einer anderen Funktionenbasis beschrieben werden, welche dem Problem angemessen ist. Zum Beispiel können Legendrefunktionen, Zernike-Polynome oder andere orthogonale Polynome aus dem Gebiet der speziellen Funktionen, wie z.B. die hypergeometrische Funktion, gewählt werden.

Bevorzugt verwendet das zweite Verfahren so viele Punkte des Interferenzbereichs, dass die Lösung der Fundamentalgleichung

$$\left|E1_{ij}\right|^2 \cdot \sum_{m,n} \overline{U_{ij,mn}} \cdot \overline{E1_{mn}} = IF_{ij} \cdot \overline{E1_{ij}} \quad \text{(19) (vgl. Gleichung (13))}$$

eindeutig ist bis auf Vielfache der Lösung. Da die Gleichung (19) einer homogenen Gleichung entspricht, ist ein Vielfaches einer Lösung ebenfalls eine Lösung. Alle solchen Lösungen sollen als äquivalent betrachtet werden. Wenn es nur solche Lösungen gibt, werden diese als eindeutig betrachtet.

Falls die Gleichung (19) keine eindeutige Lösung besitzt, kann es notwendig sein, weitere Interferenzdaten zu produzieren bzw. aufzunehmen. Dies kann z.B. dadurch geschehen, dass weitere Daten für den Interferenzterm IF aufgenommen werden mit unterschiedlichen relativen räumlichen Lagen der zur Interferenz kommenden ersten und zweiten elektrischen Felder. Alternativ kann das Vorgehen auch so beschrieben werden, dass mit dem Interferometer zwei oder mehr Aufnahmen mit unterschiedlicher projektiver Abbildung gemacht werden.

Die vorliegende Erfindung kann durch das Interferometer, ein Computerprogramm oder durch eine Kombination aus Interferometer und Computerprogramm realisiert werden.

Jede Art von Computersystem oder andere Vorrichtung, mit der die hierin beschriebenen Verfahren, d.h. das erste und zweite Verfahren, ausgeführt werden können, ist geeignet. Eine typische Kombination aus Interferometer und Computerprogramm/ Computerprogrammprodukt könnte ein Terminalrechnersystem sein, mit einem Computerprogramm, das, wenn es geladen und ausgeführt wird, das Computersystem so steuert, dass es die hierin beschriebenen Verfahren ausführt. Das gleiche gilt z. B. für auf einer Chipkarte gespeicherte Computerapplikationen bzw. Applets.

Ferner wird eine Aufgabe der Erfindung durch ein Computerprogramm gelöst. Das Computerprogramm umfasst Codeteile, die zur Durchführung der Schritte entsprechend des ersten und/oder zweiten Verfahrens adaptiert wurden, wenn das genannte Programm in einen Computer geladen wird.

Ferner wird eine Aufgabe der Erfindung durch ein Computerprogrammprodukt gelöst. Das Computerprogrammprodukt ist in einem in einem Computer einsetzbaren Medium gespeichert und weist computerlesbare Programmmittel auf, mit denen ein Computer das erste und/oder zweite Verfahren ausführen kann.

Computerprogrammmittel oder Computerprogramm im vorliegenden Kontext ist jeder Ausdruck, in jeder Sprache, jedem Code oder jeder Notation, einer Gruppe von Befehlen, die dazu dienen, bei einem System mit Informationsverarbeitungsfähigkeit eine bestimmte Funktion auszuführen, entweder direkt oder nach einem oder beiden der folgenden Vorgänge: a) nach Umwandlung in eine andere Sprache, einen anderen Code oder eine andere Notation; b) Wiedergabe in einer anderen Materialform.

Die vorliegende Erfindung wird nun anhand einzelner Beispiele und Figuren weiter erläutert. Diese Beispiele und Figuren dienen nur zur Veranschaulichung des allgemeinen erfinderischen Konzepts, ohne dass die Beispiele und Figuren der Erfindung in irgendeiner Weise einschränkend ausgelegt werden dürfen.

Figur 1 zeigt eine schematische Abbildung einer Ausführungsform eines Interferometers zur Illustration des Hauptanspruchs.

Figur 2 zeigt eine schematische Abbildung einer Ausführungsform eines Interferometers zur Illustration der ersten Bedingung des Hauptanspruchs.

Figur 3 zeigt eine schematische Abbildung einer Ausführungsform eines Interferometers zur Illustration der zweiten Bedingung des Hauptanspruchs.

Figur 4 zeigt eine schematische Abbildung einer Ausführungsform eines Interferometers zur Illustration der dritten Bedingung des Hauptanspruchs.

Figur 5 zeigt eine schematische Abbildung, welche eine projektive Abbildung des ersten elektrischen Feldes auf das zweite elektrische Feld veranschaulicht.

Figur 6 zeigt eine schematische Abbildung einer Ausführungsform eines Interferometers, bei dem sowohl der Strahlteiler als auch die Überlappungseinrichtung jeweils ein Beugungsgitter aufweisen.

Figur 7 zeigt eine schematische Abbildung einer Ausführungsform des Interferometers, bei der die Einfallsebene und die Ausfallsebene nicht identisch sind, jedoch zueinander parallel sind.

Figur 8 zeigt eine schematische Abbildung einer Ausführungsform eines Interferometers, welche kompakt gebaut werden kann und bei dem die Einfalls- und Ausfallsebene zueinander senkrecht stehen.

Figur 9 zeigt eine schematische Abbildung einer Ausführungsform eines Interferometers mit einem monolithischen Aufbau.

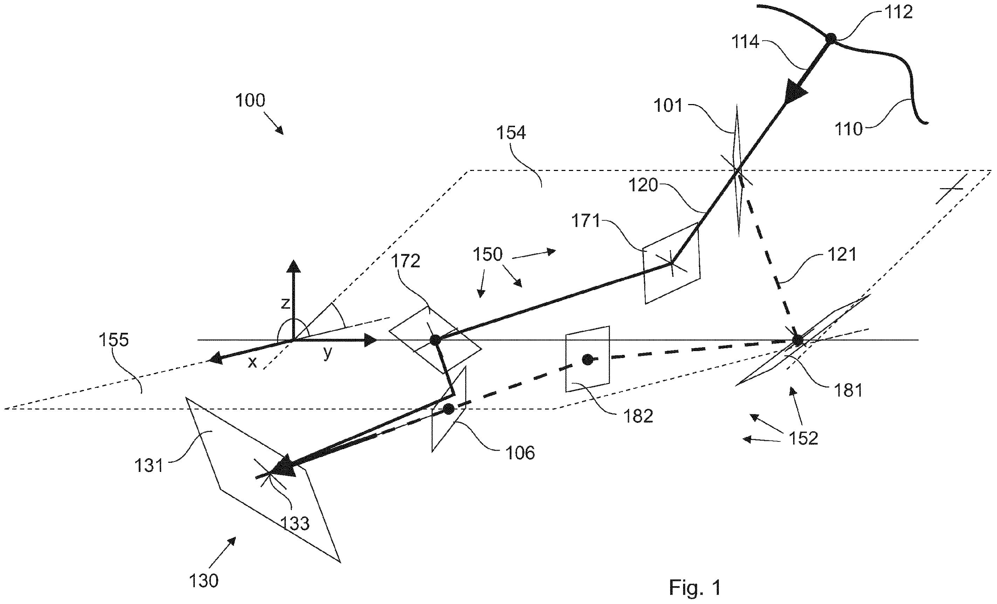

Figur 1 zeigt ein dreidimensionales Interferometer 100, welches ein von einem Objekt 110 erzeugtes Lichtfeld interferometrisch vermisst. Wie bereits im allgemeinen Beschreibungsteil beschriebenen, wird zur Charakterisierung des dreidimensionalen Interferometers ein spezielles Lichtfeld verwendet. Dies ist ein von einem Objektpunkt 112 des Objektes 110 ausgehendes Strahlenbündel, welches in der Figur 1 aus Gründen der Übersichtlichkeit nicht dargestellt ist. In Figur 1 ist lediglich ein Zentralstrahl 114, welcher Teil des Strahlenbündels ist, dargestellt. Der Zentralstrahl 114 verläuft vom Objektpunkt 112 ausgehend zu einem Strahlteiler 101, an dem er in einen ersten Zentralstrahl 120 und einen zweiten Zentralstrahl 121 aufgespalten wird.

Einer der Strahlteiler 101 kann ein Strahlteilerwürfel oder eine Glasplatte, welche bevorzugt eine auf die verwendete Strahlung abgestimmte Beschichtung aufweist, sein.

Der Zentralstrahl 114 wird am Strahlteiler 101 in der Amplitude aufgespalten (engl. amplitude splitting). Hierbei wird der zweite Zentralstrahl 121 gegenüber der Richtung des Zentralstrahls 114 um einen bestimmten Winkel abgelenkt, während der erste Zentralstrahl 120 dieselbe Richtung wie der Zentralstrahl 114 aufweist. Durch den ersten Zentralstrahl 120 und den zweiten Zentralstrahl 121 wird eine Einfallsebene 154 definiert. Die Einfallsebene 154 ist grafisch mit einer gestrichelten Linie angedeutet. Ferner ist auf der Ebene ein Kreuz angeordnet, welches die Orientierung der Einfallsebene 154 verdeutlicht.

Der erste Zentralstrahl 120 verläuft nach dem Strahlteiler 101 im ersten Interferometerarm 150. Der zweite Zentralstrahl 121 verläuft nach dem Strahlteiler 101 im zweiten Interferometerarm 152.

Nach dem Strahlteiler 101 wird der erste Zentralstrahl 120 an einem ersten Strahlumlenkelement 171 und einem zweiten Strahlumlenkelement 172, welche beide im ersten Interferometerarm 150 angeordnet sind, umgelenkt. Nach dem Strahlteiler 101 wird der zweite Zentralstrahl 121 an einem ersten Strahlumlenkelement 181 und einem zweiten Strahlumlenkelement 182, welche beide im zweiten Interferometerarm 152 angeordnet sind, umgelenkt. Wie bereits obenstehend erläutert, ist eine gewisse Anzahl an Strahlumlenkelement notwendig, um die Verteilung des ersten oder zweiten elektrischen Feldes zu drehen.

Der erste Zentralstrahl 120 wird vom zweiten Strahlumlenkelement 172 im ersten Interferometerarm 150 und der zweite Zentralstrahl 121 wird vom zweiten Strahlumlenkelement 182 im zweiten Interferometerarm 150 auf eine Überlappungseinrichtung 106 gelenkt. Von dort werden der erste Zentralstrahl 120 und der zweite Zentralstrahl 121 auf eine Detektionsebene 131 eines Detektors 130 gelenkt. Wie bereits obenstehend diskutiert, treffen sich der erste Zentralstrahl 120 und der zweite Zentralstrahl 121 in einem gemeinsamen Bildpunkt, welcher zentraler Bildpunkt 133 genannt wird.

Im Allgemeinen werden zwei auf die Überlappungseinrichtung einfallende Lichtstrahlen direkt nach der Überlappungseinrichtung nicht zu einem einzigen Lichtstrahl. Dies gilt im Allgemeinen auch für zwei Zentralstrahlen, d.h. für den ersten Zentralstrahl 120 und den zweiten Zentralstrahl 121. Es gibt jedoch eine Ausnahme für den Fall, dass der Zentralstrahl 114 von einem zentralen Objektpunkt (nicht abgebildet) emittiert wird. Es kann gezeigt werden, dass der zentrale Objektpunkt eindeutig ist, er muss jedoch nicht im Gesichtsfeld des verwendeten Interferometers liegen.

In der Ausführungsform der Figur 1 wird der zweite Zentralstrahl 121, welcher vom zweiten Strahlumlenkelement 182 im zweiten Interferometerarm 152 kommend auf die Überlappungseinrichtung 106 fällt, an der Überlappungseinrichtung 106 nicht abgelenkt.

Jedoch wird der erste Zentralstrahl 120, welcher vom zweiten Strahlumlenkelement 172 im ersten Interferometerarm 150 kommend auf die Überlappungseinrichtung 106 fällt, an der Überlappungseinrichtung 106 in Richtung zentraler Bildpunkt 133 der Direktionsebene 131 abgelenkt.

Der erste Zentralstrahl 120 direkt vor der Überlappungseinrichtung 106 und der zweite Zentralstrahl 121 direkt vor der Überlappungseinrichtung 106 definieren eine Ausfallsebene 155. Die Ausfallsebene 155 ist grafisch mit einer gestrichelten Linie angedeutet. Die Einfallsebene 154 schneidet sich mit der Ausfallsebene 155 in einer Geraden, welche der y-Achse des eingezeichneten Koordinatensystems entspricht. Hierbei ist die Ausfallsebene 155 in der x-y-Ebene angeordnet. Die Tatsache, dass die Einfallsebene 154 nicht mit der Ausfallsebene 155 übereinstimmt, entspricht der Definition eines dreidimensionalen Interferometers.

Der erste Interferometerarm 150 beginnt am Strahlteiler 101 und erstreckt sich zumindest bis zur Überlappungseinrichtung 106, streng genommen aber bis zur Detektionsebene 131. Der zweite Interferometerarm 152 beginnt am Strahlteiler 101 erstreckt sich zumindest bis zur Überlappungseinrichtung 106, streng genommen aber bis zur Detektionsebene 131.

Das dreidimensionale Interferometer 100 gemäß der Ausführungsform der Figur 1 weist insgesamt sechs Strahlumlenkungen auf. Der erste Zentralstrahl 120 (welcher vor dem Strahlteiler 101 der Zentralstrahl 114 ist) wird am Strahlteiler 101 nicht abgelenkt, jedoch jeweils einmal am ersten Strahlumlenkelement 171 und am zweiten Strahlumlenkelement 172 im ersten Interferometerarm 150 sowie an der Überlappungseinrichtung 106. Somit weist der erste Interferometerarm 150 insgesamt drei Strahlumlenkungen auf.

Der zweite Zentralstrahl 121 (welcher vor dem Strahlteiler 101 der Zentralstrahl 114 ist) wird am Strahlteiler 101 abgelenkt und am jeweils einmal am ersten Strahlumlenkelement 181 und am zweiten Strahlumlenkelement 182 im zweiten Interferometerarm 152, jedoch nicht an der Überlappungseinrichtung 106. Somit weist der zweite Interferometerarm 152 ebenfalls insgesamt drei Strahlumlenkungen auf. Somit weisen der erste Interferometerarm 150 und der zweite Interferometerarm 152 insgesamt sechs Strahlumlenkungen auf.

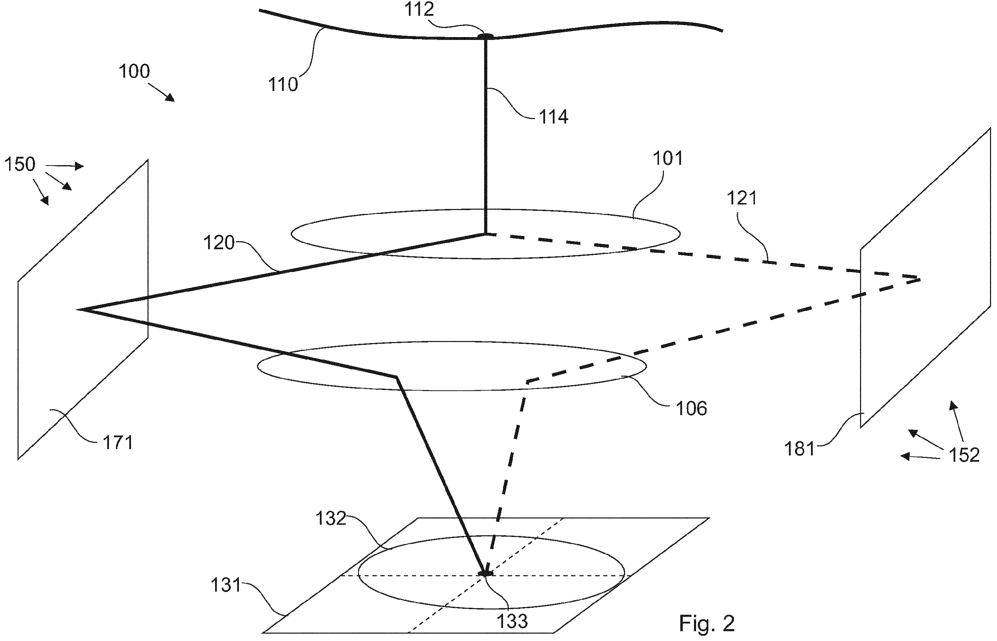

Figuren 2 bis 4 zeigen schematische Abbildungen einer Ausführungsform eines Interferometers zur Illustration der drei im allgemeinen Beschreibungsteil beschriebene Bedingungen des Hauptanspruchs.

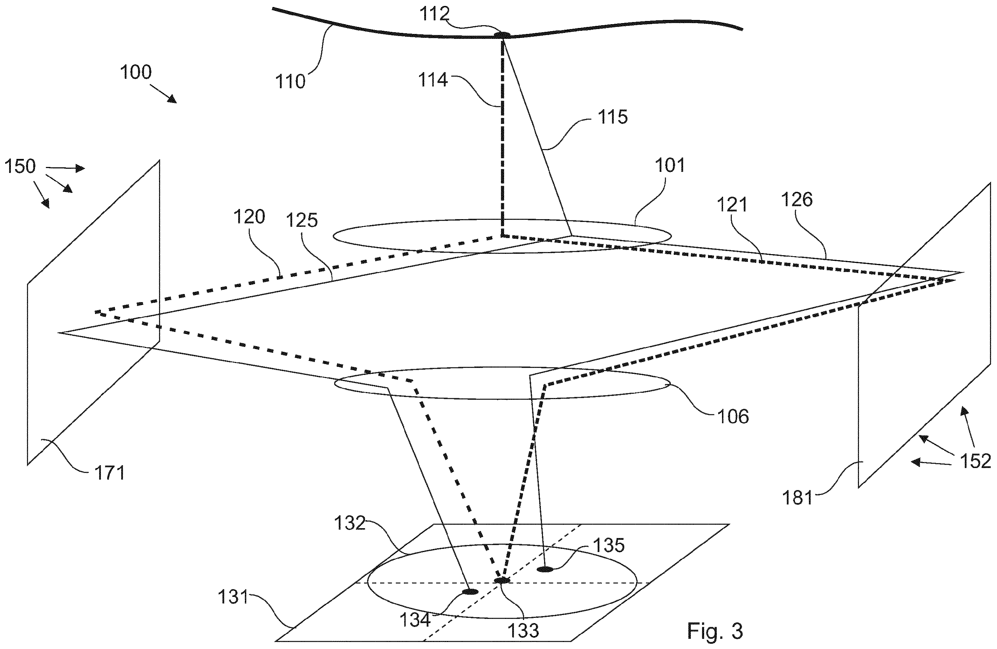

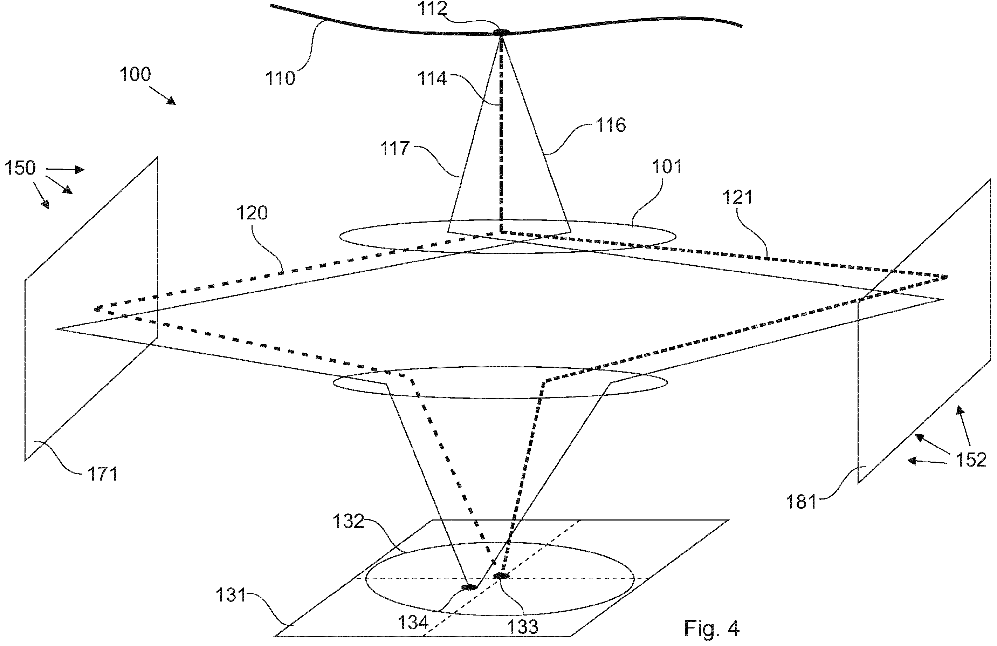

Hierbei illustriert die Figur 2 die erste Bedingung, Figur 3 die zweite Bedingung und Figur 4 die dritte Bedingung.

Ebenso wie in der Figur 1 sieht man in Figur 2 am oberen Ende ein Objekt 110 mit einem Objektpunkt 112, von dem ein Zentralstrahl 114 ausgeht, welcher an einem Strahlteiler 101 in einem ersten Zentralstrahl 120 und einen zweiten Zentralstrahl 121 aufgespalten werden. Hierbei ist der Strahlteiler 101 vereinfacht dargestellt.

Der erste Interferometerarm 150 ist ebenfalls stark vereinfacht dargestellt und weist lediglich ein erstes Strahlumlenkelement 171 auf, welches ebenfalls vereinfacht dargestellt ist. Der zweite Interferometerarm 152 ist ebenfalls stark vereinfacht dargestellt und weist lediglich ein erstes Strahlumlenkelement 181 auf, welches ebenfalls vereinfacht dargestellt ist.

Der erste Zentralstrahl 120 und der zweite Zentralstrahl 121 werden von einer ebenfalls vereinfacht dargestellten Überlappungseinrichtung 106 auf eine Detektionsebene 131 eines Detektors 130 gelenkt.

Die erste Bedingung lautet, dass der Strahlteiler 101, der erste Interferometerarm 150, der zweite Interferometerarm 152, die Überlappungseinrichtung 106 und die Detektionsebene 131 so einrichtbar oder justierbar, bevorzugt so eingerichtet sind, dass es zu einem Objektpunkt 112 des Objektes 110 genau einen von dem Objektpunkt 110 ausgehenden Zentralstrahl 114 gibt, welcher an dem Strahlteiler 101 in einen ersten Zentralstrahl 120 und einen zweiten Zentralstrahl 121 aufgespalten wird, wobei der erste Zentralstrahl 120 und der zweite Zentralstrahl 121 auf der Detektionsebene 131 in dem Interferenzbereich 132 in einem zentralen Bildpunkt 133 überlappen. Man erkennt, dass sich der erste Zentralstrahl 120 und der zweite Zentralstrahl 121 auf der Detektionsebene 131 in dem zentralen Bildpunkt 133 treffen, wobei die Ausbreitungsrichtungen der beiden zentralen Strahlen 120, 121 hierbei nicht übereinstimmen. Dies entspricht der Definition des Überlappens. Für den Ausnahmefall, dass es sich bei dem Objektpunkt 112 um einen zentralen Objektpunkt handelt, hätten der erste Zentralstrahl 120 und der zweite Zentralstrahl 121 im zentralen Bildpunkt 133 dieselbe Richtung, sie würden sich also überlagern. In der Ausführungsform der Figur 2 ist jedoch der allgemeine Fall dargestellt, in dem der Objektpunkt 112 kein zentraler Objektpunkt ist.

Es soll betont werden, dass auch in den Ausführungsformen der Figuren 2 bis 4 die Einfallsebene nicht mit der Ausfallsebene übereinstimmt. In den Figuren 2 bis 4 steht das erste Strahlumlenkelement 171 im ersten Interferometerarm 150 und das erste Strahlumlenkelement 181 im zweiten Interferometerarm 152 stellvertretend für eventuell mehrere Strahlumlenkelemente. Aufgrund dieser vereinfachten Darstellungsweise ist nicht deutlich erkennbar, dass die Einfallsebene nicht mit der Ausfallsebene übereinstimmt.

Figur 3 illustriert die zweite Bedingung des Hauptanspruchs. Diese lautet, dass es für jeden Lichtstrahl 115, welcher von dem Objektpunkt 112 des Objektes 110 ausgeht und Teil des Strahlenbündels ist, jedoch nicht der Zentralstrahl 114 ist, einen ersten den ersten Interferometerarm 150 durchlaufenden Lichtstrahl 125 und einen zweiten den zweiten Interferometerarm 152 durchlaufenden Lichtstrahl 126 gibt, welche an dem Strahlteiler 101 aus dem Lichtstrahl aufgespalten werden und welche die Detektionsebene 131 an unterschiedlichen Punkten 134, 135 treffen.

Im Vergleich zur Figur 2 ist in der Figur 3 zusätzlich der Lichtstrahl 115 eingezeichnet, welcher Teil des (nicht eingezeichneten) Strahlenbündels ist und welcher nicht der Zentralstrahl 114 ist. Der Lichtstrahl 115 wird am Strahlteiler 101 in den ersten Lichtstrahl 125 und den zweiten Lichtstrahl 126 aufgespalten, wobei der erste Lichtstrahl 125 den ersten Interferometerarm 150 und der zweite Lichtstrahl 126 den zweiten Interferometerarm 152 durchläuft. Danach werden der erste Lichtstrahl 125 und der zweite Lichtstrahl 126 an der Überlappungseinrichtung 106 in Richtung Detektionsebene 131 gelenkt, wobei der erste Lichtstrahl 125 die Detektionsebene 131 an einem Bildpunkt 134 trifft, welcher nicht der zentrale Bildpunkt 133 ist, und der zweite Lichtstrahl 126 die Detektionsebene 131 an einem Bildpunkt 135 trifft, welcher nicht der zentrale Bildpunkt 133 und auch nicht der Bildpunkt 134 ist.

Figur 4 illustriert die dritte Bedingung des Hauptanspruchs. Diese lautet, dass es zu jedem Bildpunkt 134 des Interferenzbereichs 132, welcher nicht der zentrale Bildpunkt 133 ist, genau einen dritten Lichtstrahl 116 gibt, welcher von dem Objektpunkt 112 ausgeht, nicht der Zentralstrahl 114 ist, den ersten Interferometerarm 150 durchläuft und den Bildpunkt 134 auf der Detektionsebene 131 trifft, und genau einen vierten Lichtstrahl 117 gibt, welcher von dem Objektpunkt 112 ausgeht, vor dem Strahlteiler nicht der dritte Lichtstrahl 116 ist, nicht der Zentralstrahl 114 ist, den zweiten Interferometerarm 152 durchläuft und mit dem dritten Lichtstrahl 116 an dem Bildpunkt 134 auf der Detektionsebene 131 überlappt.

Vereinfacht ausgedrückt besagt die dritte Bedingung, dass es für jedem Bildpunkt 134, welcher nicht der zentrale Bildpunkt 133 ist, genau einen dritten Lichtstrahl 116 und genau einen vierten Lichtstrahl 117 gibt, welche sich in dem Bildpunkt 134 überlappen. Hierbei sind weder der dritte Lichtstrahl 116 noch der vierte Lichtstrahl 117 der Zentralstrahl 114. Ferner verläuft der dritte Lichtstrahl 116 durch den ersten Interferometerarm 150 und der vierte Lichtstrahl 117 durch den zweiten Interferometerarm 152.

Der dritte Lichtstrahl 116 und der vierte Lichtstrahl 117 sind vor dem Strahlteiler 101 Teil des Strahlenbündels. Im ersten Interferometerarm 150 ist der dritte Lichtstrahl 116 Teil des ersten Strahlenbündels. Im zweiten Interferometerarm 152 ist der vierte Lichtstrahl 117 Teil des zweiten Strahlenbündels.

Diese drei vorstehend illustrierten und erläuterten Bedingungen charakterisieren ein erfindungsgemäßes Interferometer.

Gemäß der alternativen Formulierung des Hauptanspruchs sind der Strahlteiler, der erste Interferometerarm, der zweite Interferometerarm, die Überlappungseinrichtung und die Detektionsebene so einrichtbar oder justierbar, bevorzugt so eingerichtet, dass ein erstes elektrisches Feld, welches von dem ersten Strahlenbündel herrührt, auf der Detektionsebene und ein zweites elektrisches Feld, welches von dem zweiten Strahlenbündel herrührt, auf der Detektionsebene, durch eine projektive Abbildung P ineinander überführbar sind, wobei die projektive Abbildung P im Interferenzbereich genau einen Fixpunkt aufweist, welcher zentraler Bildpunkt genannt wird.

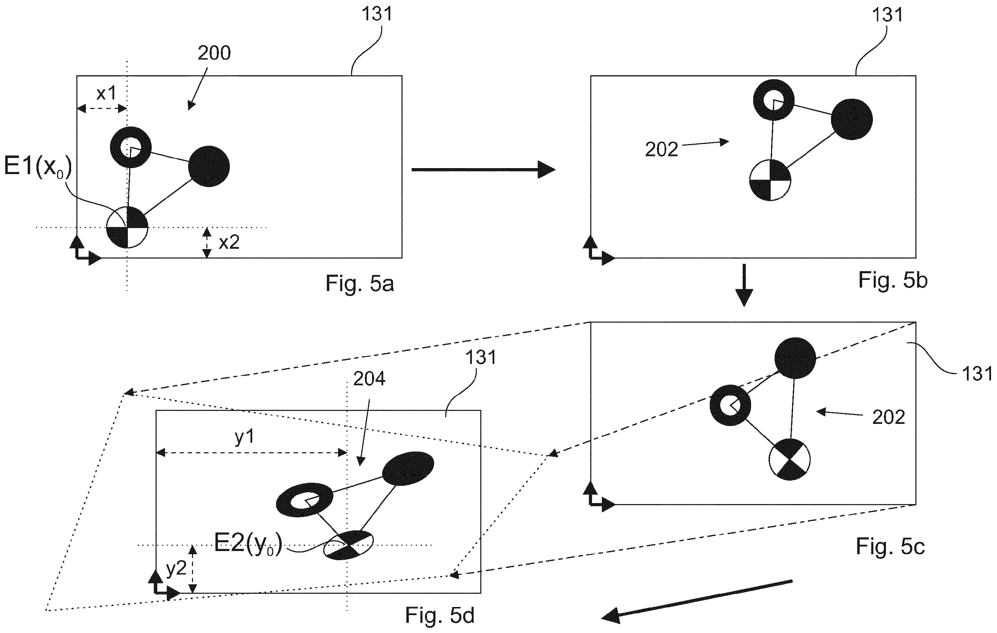

Figuren 5a bis 5d zeigen schematische Abbildungen, welche eine projektive Abbildung des ersten elektrischen Feldes auf das zweite elektrische Feld veranschaulicht.

Hierbei ist ausgehend von Figur 5a, in der ein erstes elektrisches Feld E1(x) dargestellt ist, gezeigt, wie durch eine allgemeine projektive Abbildung das zweite elektrische Feld E2(y), welches in der Figur 5d dargestellt ist, über die Zwischenschritte der Figuren 5b und 5c erhalten werden kann.

In Figur 5a ist die Detektionsebene 131 dargestellt, auf welcher eine Feldverteilung 200 des ersten elektrischen Feldes E1(x) in Abhängigkeit des Orts Vektor x, welcher eine erste Komponente x1 und eine zweite Komponente x2 aufweist. Der Koordinatenursprung ist im linken unteren Eck der Detektionsebene 131 eingezeichnet. Die dargestellte Verteilung 200 ist kein reales elektrisches Feld, sondern soll lediglich eine räumliche Struktur verdeutlichen. Die so dargestellte räumliche Struktur ist markant und kann deshalb in den nachfolgenden Transformationsschritten gut mit dem Auge verfolgt werden. Zur weiteren Verdeutlichung werden die Koordinaten des ersten elektrischen Felds am Ort $x_0$, welcher dem dargestellten Fadenkreuz entspricht, hervorgehoben.

Eine allgemeine projektive Abbildung P kann dargestellt werden als eine Abfolge einer Verschiebung, eine Drehung um einen festgelegten Punkt und einer abschließenden Projektion auf eine andere Ebene.

Ausgehend von der Figur 5a ist die Feldverteilung des ersten elektrischen Feldes E1(x) in der Figur 5b lediglich um einen konstanten Vektor verschoben worden. Dieser Vektor weist eine große x1- und eine kleinere x2-Komponente auf.

Erst wenn es sich um eine komplette projektive Abbildung handelt, ist die transformierte Feldverteilung eine reale Feldverteilung, nämlich die Feldverteilung des zweiten elektrischen Feldes auf der Detektionsebene 131. Da die projektive Abbildung die jedoch an dieser Stelle noch nicht vollkommen ist, muss die Feldverteilung ein Zwischenprodukt sein, welches als Feldverteilung 202 des transformierten ersten elektrischen Feldes bezeichnet wird.

Ausgehend von der Figur 5b wird die Feldverteilung 202 des transformierten ersten elektrischen Feldes um einen bestimmten Punkt gedreht, so dass man die Feldverteilung 202 des transformierten ersten elektrischen Feldes, so wie sie in der Figur 5c dargestellt ist, erhält.

Der folgende Schritt von Figur 5c zu Figur 5d ist der komplizierteste, denn er beinhaltet eine Projektion. Ausgehend von der Figur 5c wird die Projektion wie folgt konstruiert, so dass man das Ergebnis der Projektion der Feldverteilung 202 der Figur 5c in der Detektionsebene 131 der Figur 5d sehen kann.

Die Projektion von Figur 5c zu 5d wird anhand des nachfolgenden Beispiels verdeutlicht. Eine Projektion kann man sich beispielsweise anhand einer Buchseite veranschaulichen. Wenn man eine Buchseite betrachtet und diese im Raum dreht und sodann die Kontur betrachtet, so beschreibt die Kontur einer Projektion eines Rechtecks. Genau dies illustriert der Schritt von Figur 5c zu Figur 5d. Ausgehend von der Figur 5c wurde die Detektionsebene 131 im Raum verschoben und gedreht, was man an den vier Ecken der Detektionsebene 131 der Figur 5c gut erkennen kann. Sodann wurde die Feldverteilung 202 des transformierten ersten elektrischen Feldes auf die ursprüngliche Detektionsebene 131 projiziert, was zu der in Figur 5d abgebildeten Feldverteilung führt. Die in Figur 5d abgebildete Feldverteilung kann einerseits als eine Feldverteilung 202 des transformierten ersten elektrischen Feldes aufgefasst werden, wobei die Transformation die komplette projektive Abbildung P darstellt, andererseits kann diese Feldverteilung ebenfalls als die Feldverteilung 204 des zweiten elektrischen Feldes auf der Detektionsebene 131 aufgefasst werden.

Die Feldverteilung 204 des zweiten elektrischen Feldes auf der Detektionsebene 131 kann im ursprünglichen Koordinatensystem mit den Komponenten x1 und x2, jedoch auch in einem transformierten Koordinatensystem mit den Komponenten y1 und y2 beschrieben werden.

In Figur 5d sieht man, dass das Fadenkreuz, welches ursprünglich das erste elektrische Feld am Ort $x_0$ beschreibt, nunmehr das zweite elektrische Feld E2 am Ort $y_0$ beschreibt. Hierbei kann das erste Koordinatensystem mit den Komponenten x1 und x2 und das zweite Koordinatensystem mit den Komponenten y1 und y2 durch eine projektive Abbildung P bzw. die dazu inverse projektive Abbildung $P^{-1}$ ineinander überführt werden. Da die projektive Abbildung P erfindungsgemäß bijektiv ist, gibt es zu einer projektiven Abbildung P immer eine inverse projektive Abbildung $P^{-1}$.

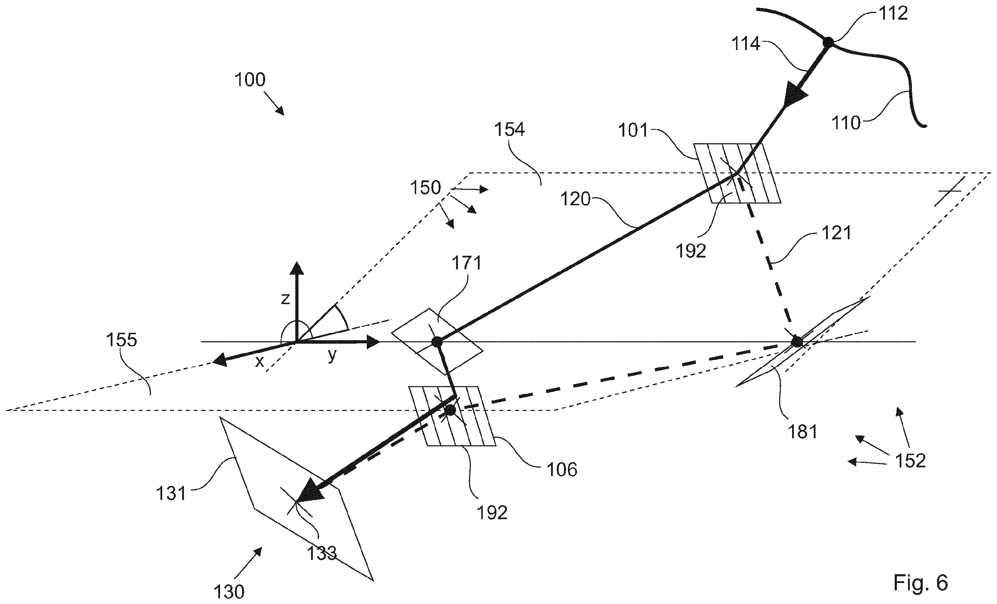

Figur 6 zeigt eine schematische Abbildung einer Ausführungsform eines Interferometers, bei dem sowohl der Strahlteiler als auch die Überlappungseinrichtung jeweils ein Beugungsgitter aufweisen. Die Ausführungsform der Figur 6 ähnelt der Darstellung der Ausführungsform der Figur 1. Sie unterscheidet sich von der Figur 1 jedoch dadurch, dass sowohl der Strahlteiler 101 als auch die Überlappungseinrichtung 106 jeweils ein Beugungsgitter 192 aufweisen.

Ferner weist der erste Interferometerarm 150 lediglich ein erstes Strahlumlenkelement 171, jedoch kein zweites Strahlumlenkelement 172 auf. Ebenso weist der zweite Interferometerarm 152 lediglich ein erstes Strahlumlenkelement 181, jedoch kein zweites Strahlumlenkelement 182 auf.

Hierbei kann das Beugungsgitter 192 des Strahlteilers 101 so verwendet werden, dass der einfallende Strahl in die erste und minus-erste Ordnung gebeugt und die nullte Ordnung nahezu unterdrückt oder nicht verwendet wird. Hierbei ist die Intensität in der ersten und minus-ersten Ordnung bevorzugt ungefähr gleich.

Ferner kann das Beugungsgitter 192 der Überlappungseinrichtung 106 umgekehrt zur normalen Strahlführung benutzt werden. Hierbei können zum Beispiel die erste und minus-erste Beugungsordnung als die beiden zusammenzuführenden Strahlen und ein für gewöhnlich einfallender Strahl als ausfallender zusammengeführter Strahl benutzt werden. Hierbei sind jedoch eventuelle Unterschiede zwischen dem Strahlteiler 101 und der Überlappungseinrichtung 106 zu beachten.

In der Ausführungsform der Figur 6 schneiden sich auch die Einfallsebene 154 und die Ausfallsebene 155 in einer Geraden, welche der y-Achse entspricht.

Ebenso beträgt die Gesamtanzahl der Strahlumlenkungen in der Ausführungsform der Figur 6 ebenso wie in der Ausführungsform der Figur 1 sechs. Überdies ist zu beachten, dass jedem Beugungsgitter 192 zwei Strahlumlenkungen entsprechen, was insgesamt vier Strahlumlenkungen entspricht. Ferner gibt es noch jeweils eine Strahlumlenkung am ersten Strahlumlenkelement 171 im ersten Interferometerarm 150 und am ersten Strahlumlenkelement 181 im zweiten Interferometerarm 152.

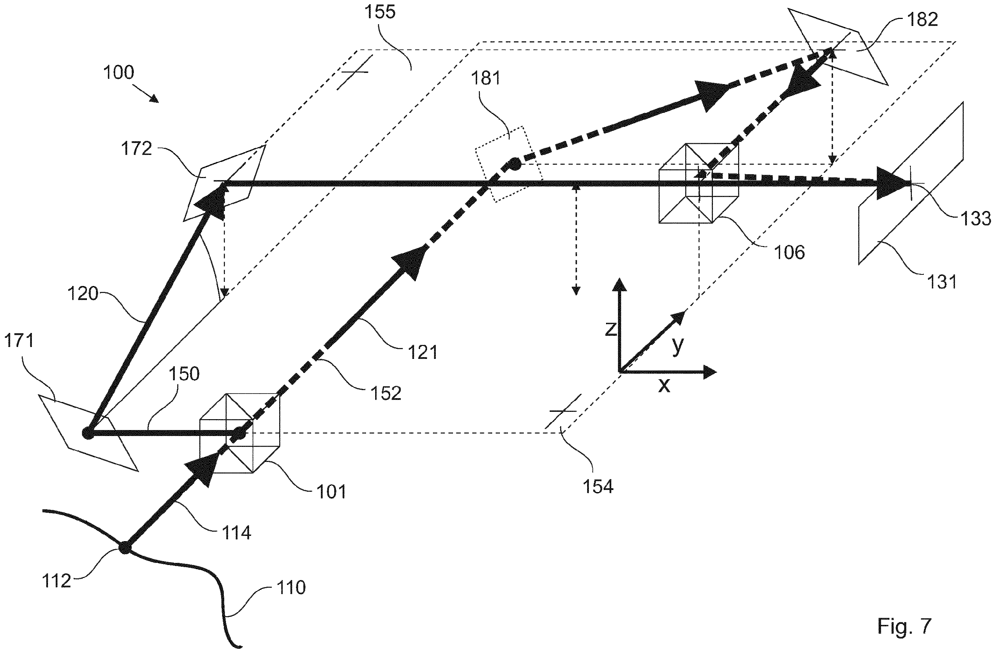

Figur 7 zeigt eine schematische Abbildung einer Ausführungsform des Interferometers, bei der die Einfallsebene 154 und die Ausfallsebene 155 nicht identisch sind, jedoch parallel zueinander sind.

Bei der Ausführungsform der Figur 7 ist besonders, dass sich die Einfallsebene 154 und die Ausfallsebene 155 nicht schneiden, sie jedoch auch nicht identisch sind. Diese Bedingung kann von zwei Ebenen nur dann erfüllt werden, wenn diese parallel zueinander sind, wie dies vorliegend der Fall ist.

Die Ausführungsform der Figur 7 weist in der linken unteren Ecke ein Objekt 110 mit einem Objektpunkt 112 auf, von dem ein Zentralstrahl 114 auf einen als Strahlteilerwürfel ausgeführten Strahlteiler 101 trifft. Während der zweite Zentralstrahl 121 von dem Strahlteiler 101 nicht abgelenkt wird und in den zweiten Interferometerarm 152 eintritt, wird der erste Zentralstrahl 120 nach links in Richtung des ersten Strahlumlenkelements 171 im ersten Interferometerarm 150 abgelenkt.

Die Einfallsebene 154 wird durch den ersten Zentralstrahl 120 und den zweiten Zentralstrahl 121 direkt nach dem Strahlteiler 101 aufgespannt.

Der erste Zentralstrahl 120 wird im ersten Interferometerarm 150 vom ersten Strahlumlenkelement 171 aus der Einfallsebene 154 heraus nach oben in Richtung des zweiten Strahlumlenkelements 172 im ersten Interferometerarm 150 abgelenkt. Die Mitte des zweiten Strahlumlenkelements 172 befindet sich in der Ausfallsebene 155. Sodann wird der erste Zentralstrahl 120 vom zweiten Strahlumlenkelement 172 in Richtung der als Strahlteiler ausgeführten Überlappungseinrichtung 106 gelenkt, durch die er jedoch unabgelenkt hindurchtritt, um dann auf die Detektionsebene 131 zu treffen.

Der zweite Zentralstrahl 121 trifft im zweiten Interferometerarm 152 vom Strahlteiler 101 kommend zunächst auf das erste Strahlumlenkelement 181 und dann auf das zweite Strahlumlenkelement 182, wonach er von dieser auf die Überlappungseinrichtung 106 reflektiert wird. Während das erste Strahlumlenkelement 181 in der Einfallsebene 154 liegt, befindet sich das zweite Strahlumlenkelement 182 in der Ausfallsebene 155. Nach der Überlappungseinrichtung 106 wird der zweite Zentralstrahl 121 auf die Detektionsebene 131 abgelenkt.

In der Ausführungsform der Figur 7 befindet sich die Ausfallsebene 155 oberhalb der Einfallsebene 154. Dies ist mit gestrichelten Pfeilen angedeutet, welche insbesondere am ersten Zentralstrahl 120 zwischen dem zweiten Strahlumlenkelement 172 und der Überlappungseinrichtung 106 gut erkennbar ist.

Ferner hat auch die Ausführungsform der Figur 7 für beide Interferometerarme 150, 152 insgesamt sechs Strahlumlenkungen. Hierbei weisen die beiden Strahlteilerwürfel des Strahlteilers 101 und der Überlappungseinrichtung 106 jeweils eine Strahlumlenkung auf. Die restlichen vier Strahlumlenkungen werden vom ersten Strahlumlenkelement 171 und dem zweiten Strahlumlenkelements 172 im ersten Interferometerarm 150 und dem ersten Strahlumlenkelement 181 und dem zweiten Strahlumlenkelement 182 im zweiten Interferometerarm 152 bewerkstelligt.

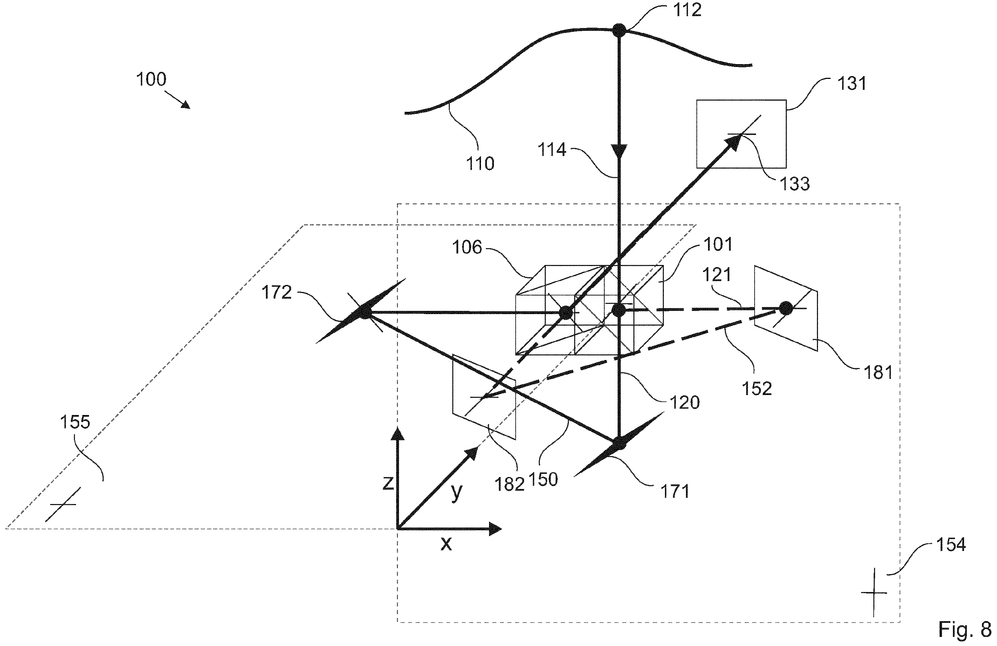

Figur 8 zeigt eine schematische Abbildung einer Ausführungsform eines Interferometers, welche sehr kompakt gebaut werden kann und bei dem die Einfalls- und Ausfallsebene zueinander senkrecht stehen.

Die Ausführungsform der Figur 8 weist einen zentralen Objektpunkt im Gesichtsfeld auf.

Die Ausführungsform der Figur 8 weist am oberen Rand ein Objekt 110 mit einem Objektpunkt 112 auf, von dem ein Zentralstrahl 114 auf einen als Strahlteilerwürfel ausgeführten Strahlteiler 101 trifft. Hierbei verläuft der Zentralstrahl 114 entlang der negativen z-Achse.

Während der zweite Zentralstrahl 121 von dem Strahlteiler 101 entlang der x-Achse abgelenkt wird, wird der erste Zentralstrahl 120 nicht abgelenkt und verläuft weiter entlang der negativen z-Achse nach unten in Richtung des ersten Strahlumlenkelements 171 im ersten Interferometerarm 150.

Da die Einfallsebene 154 durch den ersten Zentralstrahl 120 und den zweiten Zentralstrahl 121 direkt nach dem Strahlteiler 101 aufgespannt wird, liegt die Einfallsebene 154 in der x-z-Ebene, und steht somit senkrecht auf der x-y-Ebene.

Im ersten Interferometerarm 150 verläuft der erste Zentralstrahl 120 nach der Reflektion vom ersten Strahlumlenkelement 171 entlang der positiven z-Achse und der negativen x-Achse, um dann auf das zweite Strahlumlenkelement 172 zutreffen, welches in der y-z-Ebene an derselben Position steht wie das erste Strahlumlenkelement 181 im zweiten Interferometerarm 152.

Nach der Reflektion am zweiten Strahlumlenkelement 172 trifft der erste Zentralstrahl 120 auf eine als Strahlteilerwürfel ausgeführte Überlappungseinrichtung 106, welche direkt neben dem Strahlteilerwürfel des Strahlteilers 101 angeordnet ist. Der erste Zentralstrahl 120 wird von der Überlappungseinrichtung 106 auf die Detektionsebene 131 in Richtung der positiven y-Achse abgelenkt.

Der zweite Zentralstrahl 121 wird nach dem Strahlteiler 101 entlang der x-Achse auf das erste Strahlumlenkelement 181 des zweiten Interferometerarms 152 gelenkt. Nach der Reflektion am ersten Strahlumlenkelement 181 verläuft der zweite Zentralstrahl 121 entlang der negativen y-Achse und der negativen x-Achse bis er auf das zweite Strahlumlenkelement 182 trifft, dessen Mitte sich in der x-z-Ebene an derselben Position wie der zentrale Bildpunkt 133 der Detektionsebene 131 befindet. Nach der Reflektion am zweiten Strahlumlenkelement 182 wird der zweite Zentralstrahl 121 auf die Überlappungseinrichtung 106 gelenkt, durch die er unabgelenkt hindurchtritt, um auf die Detektionsebene 131 zu treffen.

Bezogen auf den zentralen Objektpunkt sind folgende Abstände auf dem Zentralstrahl für diesen Objektpunkt gleich. Der Abstand vom Strahlteiler 101 bis zum ersten Strahlumlenkelement 181 ist gleich dem Abstand vom zweiten Strahlumlenkelement 172 bis zur Überlappungsvorrichtung 106. Die Abstände zwischen den jeweils ersten Strahlumlenkelementen 171, 181 und den jeweils zweiten Strahlumlenkelementen 172, 182 sind gleich. Der Abstand zwischen Strahlteiler 101 und dem ersten Strahlumlenkelement 171 ist gleich dem Abstand zwischen dem zweiten Strahlumlenkelement 182 und der Überlappungsvorrichtung 106.

Die Ausfallsebene 155 wird durch den ersten Zentralstrahl 120 und den zweiten Zentralstrahl 121 direkt vor der Überlappungseinrichtung 106 aufgespannt und liegt in der x-y-Ebene. Somit steht die Ausfallsebene 155 senkrecht auf der Einfallsebene 154.

Auch die Ausführungsform der Figur 8 hat für beide Interferometerarme 150, 152 insgesamt sechs Strahlumlenkungen. Auch hier weisen die beiden Strahlteilerwürfel des Strahlteilers 101 und der Überlappungseinrichtung 106 jeweils eine Strahlumlenkung auf. Die restlichen vier Strahlumlenkungen werden wie auch in der Ausführungsform der Figur 7 vom ersten Strahlumlenkelement 171 und dem zweiten Strahlumlenkelement 172 im ersten Interferometerarm 150 und dem ersten Strahlumlenkelement 181 und dem zweiten Strahlumlenkelement 182 im zweiten Interferometerarm 152 bewerkstelligt.

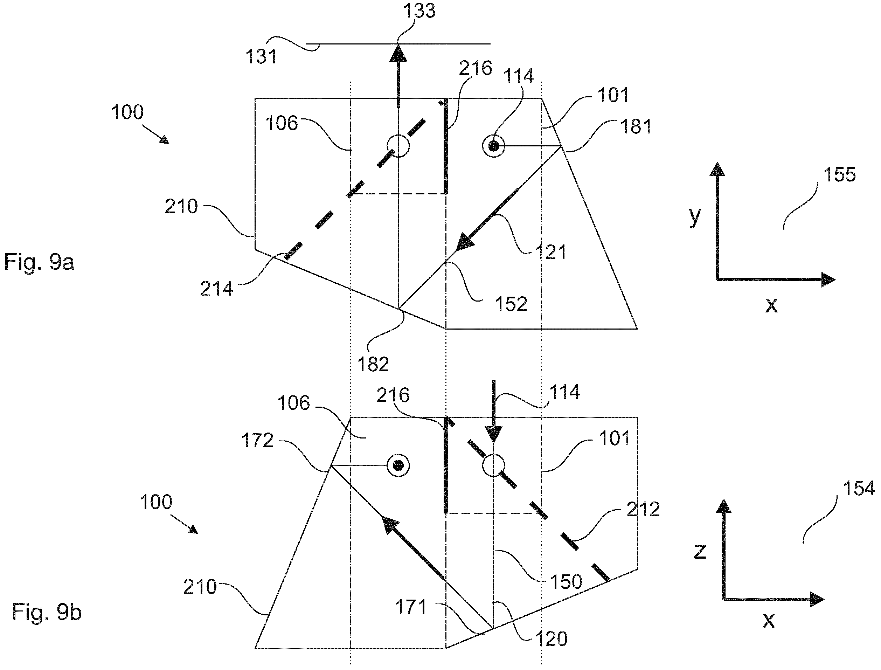

Figur 9 zeigt eine schematische Abbildung einer Ausführungsform eines Interferometers mit einem monolithischen Aufbau.

Da die vorliegende Ausführungsform der Figur 9 mit einer monolithischen Optik schwer dreidimensional darzustellen ist, wurden jeweils ein Schnitt in der x-y-Ebene, welche in der Figur 9a dargestellt ist, und ein Schnitt in der dazu senkrechten x-z-Ebene, welche in der Figur 9b dargestellt ist, gezeigt.

Hierbei ist zu bemerken, dass die Anordnung der Strahlteilerwürfel des Strahlteilers 101 und der Überlappungseinrichtung 106 und die Anordnung des ersten Zentralstrahls 120 und des zweiten Zentralstrahls 121 genauso sind wie in der Ausführungsform der Figur 8. Um zu verstehen, wie die Ausführungsform der Figur 9 aufgebaut ist, hilft es somit, sich die Ausführungsform der Figur 8 zu vergegenwärtigen.

Die angedeuteten Strahlteilerwürfel des Strahlteilers 101 und der Überlappungseinrichtung 106 sind mit gestrichelten Linien angedeutet, wobei die Grenzflächen in die monolithischen Optik 210 integriert sind, sie sind jedoch optisch nicht wirksam. Optisch wirksam sind die teilverspiegelte inneren Flächen 212 und 214 der monolithischen Optik 210.

Somit ist auch bei der Ausführungsform der Figur 9, ebenso wie in der äußeren Form der Figur 8, die Einfallsebene 154 in der x-z-Ebene und die Ausfallsebene 155 in der dazu senkrechten x-y-Ebene.

Aus Gründen der Übersichtlichkeit ist das Objekt 110 mit dem Objektpunkt 112 in der Figur 9 nicht eingezeichnet. Jedoch erkennt man den vom Objektpunkt 112 ausgehenden Zentralstrahl 114, welcher auf den Strahlteiler 101 trifft, welcher als Strahlteilerwürfel ausgeführt ist.

Der erste Zentralstrahl 120 ergibt sich aus dem Zentralstrahl 114, indem er ohne Ablenkung durch den Strahlteiler 101 tritt und entlang der negativen z-Achse verläuft (siehe Fig. 9b), bis er an einem Teil der monolithischen Optik 210, welcher als erstes Strahlumlenkelement 171 bezeichnet ist, reflektiert wird. Nach der Reflexion trifft der erste Zentralstrahl 120 wiederum auf einen Teil der monolithischen Optik 210, welcher als zweites Strahlumlenkelement 172 bezeichnet wird. Auf diesem Weg durchtritt der erste Zentralstrahl 120 die teilverspiegelte innere Fläche 214. Von dort wird der erste Zentralstrahl 120 zur Überlappungseinrichtung 106 gelenkt, von wo er in Richtung der Detektionsebene 131 abgelenkt wird (siehe Fig. 9a).

Der zweite Zentralstrahl 121 ergibt sich aus dem Zentralstrahl 114 durch Reflektion am Strahlteiler 101 in Richtung eines Teils der monolithischen Optik 210, welche als erstes Strahlumlenkelement 181 des zweiten Interferometerarms 152 bezeichnet wird (siehe Fig. 9a). Auf diesem Weg durchtritt der zweite Zentralstrahl 121 die teilverspiegelte innere Fläche 212. Von dort wird der zweite Zentralstrahl 121 zu einem anderen Teil der monolithischen Optik 210 reflektiert, welcher als zweites Strahlumlenkelement 182 bezeichnet wird. Von dort wiederum wird der zweite Zentralstrahl 121 zur Überlappungseinrichtung 106 reflektiert, welche er unabgelenkt durchtritt, um auf die Detektionsebene 131 zu treffen.

Der Strahlblocker 216 verhindert, dass Licht vom ersten Interferometerarm 150 in den zweiten Interferometerarm 152 gelangt.

Bezugszeichenliste

| | |
|---|---|
| 100 | Dreidimensionales Interferometer |
| 101 | Strahlteiler |
| 106 | Überlappungseinrichtung |
| 110 | Objekt |
| 112 | Objektpunkt |
| 114 | Zentralstrahl |
| 115 | Lichtstrahl des Strahlenbündels 140, welcher nicht der Zentralstrahl 114 ist |
| 116 | dritter Lichtstrahl |
| 117 | vierter Lichtstrahl |
| 120 | erster Zentralstrahl |
| 121 | zweiter Zentralstrahl |
| 125 | erster Lichtstrahl |
| 126 | zweiter Lichtstrahl |
| 130 | Detektor |
| 131 | Detektionsebene |

| | |
|---|---|
| 132 | Interferenzbereich |
| 133 | zentralen Bildpunkt |
| 134 | Bildpunkt |
| 135 | Bildpunkt, welcher nicht der Bildpunkt 133 ist |
| 150 | erster Interferometerarm |
| 152 | zweiter Interferometerarm |
| 154 | Einfallsebene |
| 155 | Ausfallsebene |
| 171 | erstes Strahlumlenkelement im ersten Interferometerarm |
| 172 | zweites Strahlumlenkelement im ersten Interferometerarm |
| 181 | erstes Strahlumlenkelement im zweiten Interferometerarm |
| 182 | zweites Strahlumlenkelement im zweiten Interferometerarm |
| 192 | Beugungsgitter |
| 200 | Feldverteilung des ersten elektrischen Feldes auf der Detektionsebene |
| 202 | Feldverteilung des transformierten ersten elektrischen Feldes auf der Detektionsebene |
| 204 | Feldverteilung des zweiten elektrischen Feldes auf der Detektionsebene |
| 210 | monolithische Optik |
| 212 | teilverspiegelte innere Fläche |
| 214 | teilverspiegelte innere Fläche |
| 216 | Strahlblocker |
| $E1_{ij}$ | erstes elektrisches Feld |
| $E2_{ij}$ | zweites elektrisches Feld |
| IF | Interferenzterm |
| (i, j) | Pixelrasterung |
| (m, n) | Pixelrasterung |
| $\overline{E2}_{ij}$ | komplex konjugierte Zahl des komplexen zweiten elektrischen Feldes $E2_{ij}$ |
| $\Psi_{ij}$ | Phasendifferenz |
| $\Phi1_{ij}$ | Phase des ersten elektrischen Feld |
| $\Phi2_{ij}$ | Phase des zweiten elektrischen Feld |
| U | Propagationsmatrix |
| $U_{mn,ij}$ | Elemente der Propagationsmatrix U |

**Patentansprüche**

1. Verfahren zur Vermessung eines von einem reellen Objekt (110) erzeugten Lichtfeldes mit einem dreidimensionalen Interferometer (100), wobei das Objekt (110) einen Objektpunkt (112) aufweist von dem ein Strahlenbündel ausgeht und wobei das Interferometer aufweist:

  einen ersten Interferometerarm (150),
  einen zweiten Interferometerarm (152),
  einen zwischen dem Objektpunkt (112) des Objekts (110) einerseits und dem ersten Interferometerarm (150) und dem zweiten Interferometerarm (152) andererseits angeordneten Strahlteiler (101),
  eine Detektionsebene (131) oder Detektionsfläche, welche nach dem ersten Interferometerarm (150) und dem zweiten Interferometerarm (152) angeordnet ist, wobei die Detektionsebene (131) oder Detektionsfläche einen Detektor mit Pixeln aufweist, und
  eine zwischen der Detektionsebene (131) oder Detektionsfläche einerseits und dem ersten Interferometerarm (150) und dem zweiten Interferometerarm (152) andererseits angeordnete Überlappungseinrichtung (106),

  wobei das Verfahren die folgenden Schritte aufweist:

  Einrichten des Strahlteilers (101), des ersten Interferometerarms (150), des zweiten Interferometerarms (152), der Überlappungseinrichtung (106) und der Detektionsebene (131) oder Detektionsfläche,
  Amplitudenspaltung des von dem Objektpunkt (112) ausgehenden Strahlenbündels am Strahlteiler (101) in ein erstes Strahlenbündel und ein zweites Strahlenbündel, wobei das erste Strahlenbündel durch den ersten Interferometerarm verläuft und das zweite Strahlenbündel durch den zweiten Interferometerarm verläuft,
  Zusammenführen des ersten Strahlenbündels und des zweiten Strahlenbündels mit der Überlappungseinrichtung (106) und Interferieren des ersten Strahlenbündels und des zweiten Strahlenbündels in einem Interferenzbereich (132) der Detektionsebene (131) oder Detektionsfläche, und

Messen, mit einer mit dem Detektor verbundenen Auswerteeinheit, für mehrere Bildpunkte (133, 134, 135) des Interferenzbereichs (132) der Detektionsebene (131) oder Detektionsfläche, eine Phasendifferenz ($\Psi$) zwischen den beiden dort interferierenden Lichtstrahlen und/oder eine Phase ($\Phi$) eines dort auftreffenden Lichtstrahls, wobei jeder Bildpunkt (131, 134, 135) einem Pixel des Detektors entspricht;

wobei das Einrichten des Strahlteilers (101), des ersten Interferometerarms (150), des zweiten Interferometerarms (152), der Überlappungseinrichtung (106) und der Detektionsebene (131) oder Detektionsfläche derart erfolgt,

dass es zu einem Objektpunkt (112) des Objektes (110) genau einen von dem Objektpunkt (112) ausgehenden Zentralstrahl (114) gibt, welcher an dem Strahlteiler (101) in einen ersten Zentralstrahl (120) und einen zweiten Zentralstrahl (121) aufgespalten wird, ohne eine Aufspaltung der Wellenfronten, wobei der Zentralstrahl (114) Teil des Strahlenbündels ist, der erste Zentralstrahl (120) Teil des ersten Strahlenbündels ist und den ersten Interferometerarm (150) durchläuft und der zweite Zentralstrahl (121) Teil des zweiten Strahlenbündels ist und den zweiten Interferometerarm (152) durchläuft, und wobei der erste Zentralstrahl (120) und der zweite Zentralstrahl (121) auf der Detektionsebene (131) oder Detektionsfläche in dem Interferenzbereich (132) in einem zentralen Bildpunkt (133) überlappen; und dass es für jeden Lichtstrahl (115), welcher von dem Objektpunkt (112) des Objektes (110) ausgeht und Teil des Strahlenbündels ist, jedoch nicht der Zentralstrahl (114) ist, einen ersten den ersten Interferometerarm (150) durchlaufenden Lichtstrahl (125) und einen zweiten den zweiten Interferometerarm (152) durchlaufenden Lichtstrahl (126) gibt, welche an dem Strahlteiler (101) aus dem Lichtstrahl (115) aufgespalten werden und welche die Detektionsebene (131) oder Detektionsfläche an unterschiedlichen Bildpunkten (134, 135) treffen, und dass es zu jedem Bildpunkt (134, 135) des Interferenzbereichs (132), welcher nicht der zentrale Bildpunkt (133) ist, genau einen dritten Lichtstrahl (116) gibt, welcher von dem Objektpunkt (112) ausgeht, nicht der Zentralstrahl (114) ist, den ersten Interferometerarm (150) durchläuft und den Bildpunkt (134, 135) auf der Detektionsebene (131) oder Detektionsfläche trifft, und genau einen vierten Lichtstrahl (117) gibt, welcher von dem Objektpunkt (112) ausgeht, vor dem Strahlteiler nicht der dritte Lichtstrahl (116) ist, nicht der Zentralstrahl (114) ist, den zweiten Interferometerarm (152) durchläuft und mit dem dritten Lichtstrahl (116) an dem Bildpunkt (134, 135) auf der Detektionsebene (131) oder Detektionsfläche überlappt, wobei der dritte Lichtstrahl (116) und der vierte Lichtstrahl (117) vor dem Strahlteiler (101) Teil des Strahlenbündels sind.

2. Verfahren nach einem der vorhergehenden Ansprüche, wobei der erste Interferometerarm (150) und/oder der zweite Interferometerarm (152) zwischen dem Strahlteiler (101) und der Überlappungseinrichtung (106) mindestens ein Strahlumlenkelement (171, 172, 181, 182) aufweist.

3. Verfahren nach einem der vorhergehenden Ansprüche, wobei der Strahlteiler (101), der erste Interferometerarm (150), der zweite Interferometerarm (152), die Überlappungseinrichtung (106) und die Detektionsebene (131) oder Detektionsfläche so eingerichtet sind, dass die Strahlumlenkungen für einen fünften Lichtstrahl, welcher vor dem Strahlteiler (101) der Zentralstrahl (114) und nach dem Strahlteiler (101) der erste Zentralstrahl (120) ist, wobei der fünfte Lichtstrahl nur zwischen einem Punkt unmittelbar vor dem Strahlteiler (101) und unmittelbar nach der Überlappungseinrichtung (106) betrachtet wird, und für einen sechsten Lichtstrahl, welcher vor dem Strahlteiler (101) der Zentralstrahl (114) und nach dem Strahlteiler (101) der zweite Zentralstrahl (121) ist, wobei der sechste Lichtstrahl nur zwischen einem Punkt unmittelbar vor dem Strahlteiler (101) und unmittelbar nach der Überlappungseinrichtung (106) betrachtet wird, in der Summe gleich 5, 6 oder 7 sind.

4. Verfahren nach einem der vorhergehenden Ansprüche, wobei eine Einfallsebene (154), welche gegeben ist durch den ersten Zentralstrahl (120) und den zweiten Zentralstrahl (121) direkt nach dem Strahlteiler (101), und eine Ausfallsebene (155), welche gegeben ist durch den ersten Zentralstrahl (120) und den zweiten Zentralstrahl (121) direkt vor der Überlappungseinrichtung (106), ungleich sind.

5. Verfahren nach einem der vorhergehenden Ansprüche, wobei der erste Interferometerarm (150) und/oder der zweite Interferometerarm (152) eine Vorrichtung zur Veränderung eines optischen Pfades des entsprechenden Interferometerarms (150, 152) aufweist.

6. Verfahren nach einem der vorhergehenden Ansprüche wobei das Interferometer (100) ferner aufweist: eine Vorrichtung zum relativen Verschieben, relativen Strecken, relativen Verkippen und/oder relativen Rotieren eines auf der Detektionsebene (131) oder Detektionsfläche vorhandenen, ersten Lichtfeldes, welches vom ersten Strahlenbündel herrührt, und eines auf der Detektionsebene (131) oder Detektionsfläche vorhandenen, zweiten Lichtfeldes, welches vom zweiten Strahlenbündel herrührt.

7. Verfahren nach einem der vorhergehenden Ansprüche, wobei das Interferometer (100) Teil einer holographischen Kamera ist.

8. Verfahren nach einem der vorherigen Ansprüche, ferner aufweisend: Bestimmung einer Phasendifferenz ($\Psi_{ij}$) an den mindestens einen Bildpunkt (134, 135) des Interferenzbereichs (132) zwischen einem ersten elektrischen Feld ($E1_{ij}$) und einem zweiten elektrischen Feld ($E2_{ij}$), welche an mindestens einem Bildpunkt (134, 135) interferieren, wobei das erste elektrische Feld ( $E1_{ij}$ ) von einem ersten Interferometerarm (152) herrührt und das zweiten elektrische Feld ($E2_{ij}$) von einem zweiten Interferometerarm (152) herrührt.

9. Verfahren nach einem der vorherigen Ansprüche zur Bestimmung einer Phasendifferenz, aufweisend folgende Schritte:

für einen Teil des Interferenzbereichs (132) Bestimmung der Intensität oder des Betrages eines ersten elektrischen Feldes ($E1_{ij}$ ), welches von einem ersten Interferometerarm (150) herrührt, und eines zweiten elektrischen Feldes ($E2_{ij}$), welches von einem zweiten Interferometerarm (152) herrührt,
für den Teil des Interferenzbereichs (132) Bestimmung des Interferenzterms (IF) gemäß der Gleichung

$$IF_{ij} = \left|E1_{ij}\right| \cdot \left|E2_{ij}\right| \cdot \exp\left(i \cdot \Psi_{ij}\right),$$

wobei $\Psi_{ij}$ eine Phasendifferenz zwischen der Phase ($\Phi1_{ij}$) des ersten elektrischen Feldes ($E1_{ij}$) und der Phase ($\Phi2_{ij}$) des zweiten elektrischen Feldes ($E2_{ij}$) ist,
Bestimmung einer Propagationsmatrix (U), wobei ein Element der Propagationsmatrix (U) angibt, wie für eine gegebene Pixelrasterung der Pixel des Interferenzbereichs das erste elektrischen Feld ($E1_{ij}$) an einem Pixel mit den Indizes i und j zu dem zweiten elektrischen Feld ($E2_{ij}$) an einem Pixel mit den Indizes m und n transformiert wird,

$$\left|E1_{ij}\right|^2 \cdot \sum_{m,n} \overline{U_{ij,mn}} \cdot \overline{E1_{mn}} = IF_{ij} \cdot \overline{E1_{ij}}$$

für den Teil des Interferenzbereichs (132) Auflösen der Gleichung
nach dem komplexen ersten elektrischen Feld ( $\overline{E1_{ij}}$ ),
Ermitteln des komplexen zweiten elektrischen Felds ($E2_{ij}$) aus dem komplexen ersten elektrischen Feld ($\overline{E1_{ij}}$) und der Propagationsmatrix (U) mittels der Formel

$$E2_{mn} = \sum_{i,j} U_{mn,ij} \cdot E1_{ij}$$

und
Ermitteln einer Phasendifferenz $\Psi_{ij} = \Phi1_{ij} - \Phi2_{ij}$ in dem Interferenzbereich (132), bis auf eine Konstante ($\alpha$), durch Auflösung der folgenden Gleichung und unter Hinzunahme eines Phase-Shifting-Verfahren und/oder eines Spatial-Carrier-Verfahrens:

$$I_g = \left|E1_{ij}\right|^2 + \left|E2_{ij}\right|^2 + IF_{ij} + \overline{IF_{ij}} = \left|E1_{ij}\right|^2 + \left|E2_{ij}\right|^2 + 2 \cdot \Re\left(IF_{ij}\right) =$$
$$= \left|E1_{ij}\right|^2 + \left|E2_{ij}\right|^2 + 2 \cdot \left|E1_{ij}\right|\left|E2_{ij}\right| \cdot \cos\left(\Psi_{i,j} + \alpha\right),$$

wobei $\Phi1_{ij}$ die Phase des ersten elektrischen Feldes ist, $\Phi2_{ij}$ die Phase des zweiten elektrischen Feldes ist, und $I_g$ = $|E_1(x_{i,j}) + E_2(x_{i,j})|^2$ die in dem Interferenzbereich (132) gemessene Intensität der Superposition des ersten und zweiten elektrischen Feldes ist.

**Claims**

1. Method for measuring a light field produced by a real object (110), using a three-dimensional interferometer (100), wherein the object (110) has an object point (112), from which a beam bundle comes, and wherein the interferometer comprises:

a first interferometer arm (150),
a second interferometer arm (152),
a beam splitter (101) arranged between the object point (112) of the object (110) on one side and the first interferometer arm (150) and the second interferometer arm (152) on the other side,
a detection plane (131) or detection surface, which is arranged downstream of the first interferometer arm (150) and the second interferometer arm (152), the detection plane (131) or detection surface comprising a detector with pixels, and
an overlapping device (106) arranged between the detection plane (131) or detection surface on one side and the first interferometer arm (150) and the second interferometer arm (152) on the other side,

the method comprising the following steps:

setting up the beam splitter (101), the first interferometer arm (150), the second interferometer arm (152), the overlapping device (106) and the detection plane (131) or detection surface,
splitting the amplitude of the beam bundle coming from the object point (112) into a first beam bundle and a second beam bundle at the beam splitter (101), the first beam bundle passing through the first interferometer arm and the second beam bundle passing through the second interferometer arm, combining the first beam bundle and the second beam bundle by means of the overlapping device (106), and causing the first beam bundle and the second beam bundle to interfere in an interference area (132) of the detection plane (131) or detection surface, and
measuring, by means of an evaluation unit connected to the detector, for a plurality of image points (133, 134, 135) of the interference area (132) of the detection plane (131) or detection surface, a phase difference ($\Psi$) between the two light beams interfering there and/or a phase ($\Phi$) of a light beam impinging there, each image point (131, 134, 135) corresponding to one pixel of the detector;
wherein the beam splitter (101), the first interferometer arm (150), the second interferometer arm (152), the overlapping device (106) and the detection plane (131) or detection surface are set up

in such a way that, for an object point (112) of the object (110), there is exactly one central beam (114) that comes from the object point (112), which central beam is split into a first central beam (120) and a second central beam (121) at the beam splitter (101), without splitting the wavefronts,
wherein the central beam (114) is part of the beam bundle, the first central beam (120) is part of the first beam bundle and passes through the first interferometer arm (150), and the second central beam (121) is part of the second beam bundle and passes through the second interferometer arm (152), and
wherein the first central beam (120) and the second central beam (121) overlap in a central image point (133) in the interference area (132) on the detection plane (131) or detection surface; and
in such a way that, for each light beam (115) that comes from the object point (112) of the object (110) and is part of the beam bundle but is not the central beam (114), there is a first light beam (125) that passes through the first interferometer arm (150) and a second light beam (126) that passes through the second interferometer arm (152), which light beams are split from the light beam (115) at the beam splitter (101) and hit the detection plane (131) or detection surface at different image points (134, 135), and
in such a way that, for each image point (134, 135) of the interference area (132) that is not the central image point (133), there is exactly one third light beam (116) that comes from the object point (112), is not the central beam (114), passes through the first interferometer arm (150) and hits the image point (134, 135) on the detection plane (131) or detection surface, and exactly one fourth light beam (117) that comes from the object point (112), is not the third light beam (116) upstream of the beam splitter, is not the central beam (114), passes through the second interferometer arm (152) and overlaps with the third light beam (116) at the image point (134, 135) on the detection plane (131) or detection surface,
wherein the third light beam (116) and the fourth light beam (117) are part of the beam bundle upstream of the beam splitter (101).

2. Method according to any one of the preceding claims, wherein the first interferometer arm (150) and/or the second interferometer arm (152) has at least one beam-deflecting element (171, 172, 181, 182) between the beam splitter (101) and the overlapping device (106).

3. Method according to any one of the preceding claims, wherein the beam splitter (101), the first interferometer arm (150), the second interferometer arm (152), the overlapping device (106) and the detection plane (131) or detection surface are set up in such a way that the beam deflections for a fifth light beam, which is the central beam (114) upstream of the beam splitter (101) and is the first central beam (120) downstream of the beam splitter (101), the fifth light beam being considered only between a point immediately upstream of the beam splitter (101) and immediately downstream of the overlapping device (106), and for a sixth light beam, which is the central beam (114) upstream of the beam splitter (101) and is the second central beam (121) downstream of the beam splitter (101), the sixth light beam being considered only between a point immediately upstream of the beam splitter (101) and immediately downstream of the overlapping device (106), are equal to 5, 6 or 7 in total.

4. Method according to any one of the preceding claims, wherein a plane of incidence (154), which is defined by the first central beam (120) and the second central beam (121) directly downstream of the beam splitter (101), and an exit plane (155), which is defined by the first central beam (120) and the second central beam (121) directly upstream of the overlapping device (106), are not the same.

5. Method according to any one of the preceding claims, wherein the first interferometer arm (150) and/or the second interferometer arm (152) has a device for changing an optical path of the interferometer arm (150, 152) in question.

6. Method according to any one of the preceding claims, wherein the interferometer (100) further comprises: a device for the relative displacement, relative stretching, relative tilting and/or relative rotation of a first light field present on the detection plane (131) or detection surface, which first light field originates from the first beam bundle, and a second light field present on the detection plane (131) or detection surface, which second light field originates from the second beam bundle.

7. Method according to any one of the preceding claims, wherein the interferometer (100) is part of a holographic camera.

8. Method according to any one of the preceding claims, which further comprises: determining a phase difference ($\Psi_{ij}$) at the at least one image point (134, 135) of the interference area (132) between a first electric field ($E1_{ij}$) and a second electric field ($E2_{ij}$), which interfere at at least one image point (134, 135), the first electric field ($E1_{ij}$) originating from a first interference arm (152) and the second electric field ($E2_{ij}$) originating from a second interference arm (152).

9. Method according to any one of the preceding claims for determining a phase difference, comprising the following steps:

for a part of the interference area (132), determining the intensity or the absolute value of a first electric field ($E1_{ij}$), which originates from a first interference arm (150), and of a second electric field ($E2_{ij}$), which originates from a second interference arm (152),
for the part of the interference area (132), determining the interference term (IF) according to the equation

$$IF_{ij} = |E1_{ij}| \cdot |E2_{ij}| \cdot \exp(i \cdot \Psi_{ij}),$$

where $\Psi_{ij}$ is a phase difference between the phase ($\Phi1_{ij}$) of the first electric field ($E1_{ij}$) and the phase ($\Phi2_{ij}$) of the second electric field ($E2_{ij}$),
determining a propagation matrix (U), wherein an element of the propagation matrix (U) indicates how, for a given pixel grid of the interference area, the first electric field ($E1_{ij}$) at a pixel with the indices i and j is transformed into the second electric field ($E2_{ij}$) at a pixel with the indices m and n,
for the part of the interference area (132), solving the equation $|E1_{ij}|^2 \cdot \Sigma_{m,n} \overline{U_{ij,mn}} \cdot \overline{E1_{mn}} = IF_{ij} \cdot \overline{E1_{ij}}$ after the complex first electric field ($E1_{ij}$),
determining the complex second electric field ($\overline{E2_{ij}}$) from the complex first electric field ($\overline{E1_{ij}}$) and the propagation matrix (U) using the formula $E2_{mn} = \Sigma_{ij} U_{mn,ij} \cdot \overline{E1_{ij}}$, and
determining a phase difference $\Psi_{ij} = \Phi1_{ij} - \Phi2_{ij}$ in the interference area (132), down to one constant ($\alpha$), by solving the following equation and adding a phase-shifting method and/or a spatial carrier method:

$$I_g = |E1_{ij}|^2 + |E2_{ij}|^2 + IF_{ij} + \overline{IF_{ij}} = |E1_{ij}|^2 + |E2_{ij}|^2 + 2 \cdot \Re(IF_{ij}) =$$

$$= |E1_{ij}|^2 + |E2_{ij}|^2 + 2 \cdot |E1_{ij}||E2_{ij}| \cdot \cos(\Psi_{ij} + \alpha)$$

where $\Phi1_{ij}$ is the phase of the first electric field, $\Phi2_{ij}$ is the phase of the second electric field, and $I_g = |E_1(x_{ij}) + E_2(x_{ij})|^2$ is the intensity of the superposition of the first and second electric field, measured in the interference area (132).

**Revendications**

1. Procédé de mesure d'un champ lumineux généré par un objet réel (110) au moyen d'un interféromètre tridimensionnel (100), ledit objet (110) présentant un point d'objet (112) d'où part un faisceau de rayons et ledit interféromètre présentant :

un premier bras d'interféromètre (150),
un deuxième bras d'interféromètre (152),
un séparateur de faisceau (101) disposé entre le point (112) de l'objet (110) d'une part, et le premier bras d'interféromètre (150) et le deuxième bras d'interféromètre (152) d'autre part,
un plan de détection (131) ou une surface de détection disposée après le premier bras d'interféromètre (150) et le deuxième bras d'interféromètre (152), le plan de détection (131) ou la surface de détection présentant un détecteur avec des pixels, et
un dispositif de chevauchement (106) disposé entre le plan de détection (131) ou la surface de détection d'une part, et le premier bras d'interféromètre (150) et le deuxième bras d'interféromètre (152) d'autre part,

ledit procédé comprenant les étapes suivantes :

agencement du séparateur de faisceau (101), du premier bras d'interféromètre (150), du deuxième bras d'interféromètre (152), du dispositif de chevauchement (106) et du plan de détection (131) ou de la surface de détection,
division de l'amplitude du faisceau de rayons partant du point d'objet (112) au niveau du séparateur de faisceau (101) en un premier faisceau de rayons et un deuxième faisceau de rayons, le premier faisceau de rayons traversant le premier bras d'interféromètre et le deuxième faisceau de rayons traversant le deuxième bras d'interféromètre,
convergence du premier faisceau de rayons et du deuxième faisceau de rayons avec le dispositif de chevauchement (106) et interférence du premier faisceau de rayons et du deuxième faisceau de rayons dans une zone d'interférence (132) du plan de détection (131) ou de la surface de détection, et
mesure, par une unité d'évaluation reliée au détecteur, pour plusieurs points d'image (133, 134, 135) de la zone d'interférence (132) du plan de détection (131) ou de la surface de détection, d'un différentiel de phase (T) entre les deux rayons lumineux qui y interfèrent et/ou d'une phase (O) d'un rayon lumineux qui lui est incident, chaque point d'image (131, 134, 135) correspondant à un pixel du détecteur ;
où l'agencement du séparateur de faisceau (101), du premier bras d'interféromètre (150), du deuxième bras d'interféromètre (152), du dispositif de chevauchement (106) et du plan de détection (131) ou de la surface de détection est exécuté

de telle manière que soit présenté, vers un point (112) de l'objet (110), exactement un faisceau central (114) partant du point (112) de l'objet, divisé au niveau du séparateur de faisceau (101) en un premier faisceau central (120) et un deuxième faisceau central (121), sans division des fronts d'onde,
où le faisceau central (114) fait partie du faisceau de rayons, le premier faisceau central (120) fait partie du premier faisceau de rayons et traverse le premier bras d'interféromètre (150) et le deuxième faisceau central (121) fait partie du deuxième faisceau de rayons et traverse le deuxième bras d'interféromètre (152), et
où le premier faisceau central (120) et le deuxième faisceau central (121) se chevauchent en un point d'image central (133) sur le plan de détection (131) ou la surface de détection dans la zone d'interférence (132) ; et
de telle manière que, pour chaque faisceau lumineux (115) partent du point (112) de l'objet (110) et faisant partie du faisceau de rayons, en étant toutefois distinct du faisceau central (114), un premier faisceau lumineux (125) est présenté, traversant le premier bras d'interféromètre (150), et un deuxième faisceau lumineux (126) traversant le deuxième bras d'interféromètre (152), lesquels sont séparés du faisceau lumineux (115) au niveau du séparateur de faisceau (101) et sont incidents au plan de détection (131) ou à la surface de détection sur différents points d'image (134, 135), et
de telle manière qu'est présenté, pour chaque point d'image (134, 135) de la zone d'interférence (132) distinct du point d'image central (133),

exactement un troisième faisceau lumineux (116), partant du point d'objet (112) distinct du faisceau central (114), traversant le premier bras d'interféromètre (150) et rencontrant le point d'image (134, 135) sur le plan de détection (131) ou la surface de détection, et qu'est présenté exactement un quatrième faisceau lumineux (117) partant du point d'objet (112) avant le séparateur de faisceau, distinct du troisième faisceau lumineux (116), distinct du faisceau central (114), traversant le deuxième bras d'interféromètre (152) et chevauchant le troisième faisceau lumineux (116) sur le point image (134, 135) dans le plan de détection (131) ou la surface de détection,

où le troisième faisceau lumineux (116) et le quatrième faisceau lumineux (117) font partie du faisceau de rayons avant le séparateur de faisceau (101).

2. Procédé selon l'une des revendications précédentes, où le premier bras d'interféromètre (150) et/ou le deuxième bras d'interféromètre (152) présentent au moins un élément de déviation de faisceau (171, 172, 181, 182) entre le séparateur de faisceau (101) et le dispositif de chevauchement (106).

3. Procédé selon l'une des revendications précédentes, où le séparateur de faisceau (101), le premier bras d'interféromètre (150), le deuxième bras d'interféromètre (152), le dispositif de chevauchement (106) et le plan de détection (131) ou la surface de détection sont agencés de telle manière que les déviations de faisceau pour un cinquième faisceau lumineux, lequel est le faisceau central (114) avant le séparateur de faisceau (101) et le premier faisceau central (120) après le séparateur de faisceau (101), le cinquième faisceau lumineux n'étant observé qu'entre un point situé immédiatement avant le séparateur de faisceau (101) et immédiatement après le dispositif de chevauchement (106), et pour un sixième faisceau lumineux, lequel est le faisceau central (114) avant le séparateur de faisceau (101) et le deuxième faisceau central (121) après le séparateur de faisceau (101), le sixième faisceau lumineux n'étant observé qu'entre un point situé immédiatement avant le séparateur de faisceau (101) et immédiatement après le dispositif de chevauchement (106), sont égales à 5, 6 ou 7 au total.

4. Procédé selon l'une des revendications précédentes, où un plan d'incidence (154), défini par le premier faisceau central (120) et le deuxième faisceau central (121) directement après le séparateur de faisceau (101), et un plan de sortie (155), défini par le premier faisceau central (120) et le deuxième faisceau central (121) directement avant le dispositif de chevauchement (106), ne sont pas identiques.

5. Procédé selon l'une des revendications précédentes, où le premier bras d'interféromètre (150) et/ou le deuxième bras d'interféromètre (152) présentent un dispositif de modification d'un trajet optique du bras d'interféromètre correspondant (150, 152).

6. Procédé selon l'une des revendications précédentes, où l'interféromètre (100) comprend en outre : un dispositif de décalage relatif, d'extension relative, d'inclinaison relative et/ou de rotation relative d'un premier champ lumineux présent sur le plan de détection (131) ou la surface de détection et provenant du premier faisceau de rayons, et d'un deuxième champ lumineux présent sur le plan de détection (131) ou la surface de détection et provenant du deuxième faisceau de rayons.

7. Procédé selon l'une des revendications précédentes, où l'interféromètre (100) fait partie d'une caméra holographique.

8. Procédé selon l'une des revendications précédentes, comprenant en outre : la détermination d'un différentiel de phase ($\Psi_{ij}$) sur ledit au moins un point d'image (134, 135) de la zone d'interférence (132) entre un premier champ électrique ($E1_{ij}$) et un deuxième champ électrique ($E2_{ij}$) interférant sur ledit au moins un point d'image (134, 135), le premier champ électrique ($E1_{ij}$) provenant d'un premier bras d'interféromètre (152) et le deuxième champ électrique ($E2_{ij}$) provenant d'un deuxième bras d'interféromètre (152).

9. Procédé selon l'une des revendications précédentes, pour la détermination d'un différentiel de phase, comprenant les étapes suivantes :

pour une partie de la zone d'interférence (132), détermination de l'intensité ou de l'amplitude d'un premier champ électrique ($E1_{ij}$) provenant d'un premier bras d'interféromètre (150) et d'un deuxième champ électrique ($E2_{ij}$) provenant d'un deuxième bras d'interféromètre (152),
pour la partie de la zone d'interférence (132), détermination du terme d'interférence (IF) conformément à l'équation

$$IF_{ij} = |E1_{ij}| \cdot |E2_{ij}| \cdot \exp(i \cdot \Psi_{ij}),$$

où $\Psi_{ij}$ est un différentiel de phase entre la phase ($\Phi1_{ij}$) du premier champ électrique ($E1_{ij}$) et la phase ($\Phi2_{ij}$) du deuxième champ électrique ($E2_{ij}$), détermination d'une matrice de propagation (U), un élément de ladite matrice de propagation (U) indiquant comment, pour une trame de pixels donnée des pixels de la zone d'interférence, le premier champ électrique ($E1_{ij}$) sur un pixel avec les indices i et j est transformé en le deuxième champ électrique ($E2_{ij}$) sur un pixel avec les indices m et n,

pour la partie de la zone d'interférence (132), résolution de l'équation $|E1_{ij}|^2 \cdot \Sigma_{m,n} \overline{U_{ij,mn}} \cdot E1_{mn} = IF_{ij} \cdot \overline{E1_{ij}}$ suivant le premier champ électrique complexe ($\overline{E1_{ij}}$),

détermination du deuxième champ électrique complexe ($\overline{E2_{ij}}$) à partir du premier champ électrique complexe ($E1_{ij}$) et de la matrice de propagation (U) au moyen de la formule $E2_{mn} = \Sigma_{i,j} U_{mn,ij} \cdot E1_{ij}$, et

détermination d'un différentiel de phase $\Psi_{ij} = \Phi1_{ij} - \Phi2_{ij}$ dans la zone d'interférence (132) jusqu'à une constante ($\alpha$), par résolution de l'équation suivante et par adjonction d'un procédé de décalage de phase et/ou d'un procédé de porteuse spatiale :

$$I_g = |E1_{ij}|^2 + |E2_{ij}|^2 + IF_{ij} = |E1_{ij}|^2 + |E2_{ij}|^2 + 2 \cdot \Re(IF_{ij}) =$$

$$|E1_{ij}|^2 + |E2_{ij}|^2 + 2 \cdot |E1_{ij}||E2_{ij}| \cdot \cos(\Psi_{ij} + \alpha)$$

où $\Phi1_{ij}$ est la phase du premier champ électrique, $\Phi2ij$ est la phase du deuxième champ électrique, et $I_g = |E_1(x_{ij}) + E_2(x_{ij})|^2$ est l'intensité de la superposition du premier et du deuxième champs électriques, mesurée dans la zone d'interférence (132).

Fig. 1

EP 3 420 328 B1

Fig. 2

EP 3 420 328 B1

Fig. 3

EP 3 420 328 B1

Fig. 4

EP 3 420 328 B1

Fig. 5a

Fig. 5b

Fig. 5c

Fig. 5d

Fig. 6

EP 3 420 328 B1

Fig. 7

EP 3 420 328 B1

Fig. 8

EP 3 420 328 B1

Fig. 9a

Fig. 9b

EP 3 420 328 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014111979
- US 2004033426 A1
- US 7499174 B2

**In der Beschreibung aufgeführte Nicht-Patentliteratur**

- **GIANCARLO PEDRINI et al.** Digital holography of selfluminous objects by using a Mach-Zehnder setup. *Optics Letters*, vol. 37 (4), 713-715
- **TORU YOSHIZAWA**. Handbook of optical Metrology. CRC Press Taylor and Francis Group, vol. 2
- Speckle Methods and applications. Nandigana Krishna Mohan
- **MAX BORN** ; **EMIL WOLF**. Principles of optics. Cambridge Universiy Press, 2013, vol. 8